(19) Europäisches Patentamt / European Patent Office / Office européen des brevets

(11) **EP 3 734 389 B1**

(12) **EUROPEAN PATENT SPECIFICATION**

(45) Date of publication and mention of the grant of the patent:
**08.06.2022 Bulletin 2022/23**

(21) Application number: **18900778.4**

(22) Date of filing: **28.09.2018**

(51) International Patent Classification (IPC):
*G05D 1/02* (2020.01)  *G06K 9/00* (2022.01)
*G01S 13/88* (2006.01)  *G01C 21/36* (2006.01)
*B60W 30/10* (2006.01)  *B60W 30/095* (2012.01)
*G01C 21/28* (2006.01)  *G01C 21/26* (2006.01)
*G01S 13/86* (2006.01)  *G01S 13/87* (2006.01)
*G01S 13/89* (2006.01)  *G01S 13/931* (2020.01)
*G06K 9/62* (2022.01)

(52) Cooperative Patent Classification (CPC):
**G01C 21/3602; G01C 21/28; G01C 21/36;
G01S 13/86; G01S 13/87; G01S 13/89;
G01S 13/931; G06K 9/6293; G06V 20/58;
G06V 20/588;** G01S 2013/932; G01S 2013/93271;
G01S 2013/93274

(86) International application number:
**PCT/CN2018/108329**

(87) International publication number:
**WO 2019/140950 (25.07.2019 Gazette 2019/30)**

(54) **VEHICLE POSITIONING METHOD AND APPARATUS**

VERFAHREN UND VORRICHTUNG ZUR FAHRZEUGPOSITIONIERUNG

PROCÉDÉ ET APPAREIL DE POSITIONNEMENT DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.01.2018 CN 201810040981**

(43) Date of publication of application:
**04.11.2020 Bulletin 2020/45**

(73) Proprietor: **HUAWEI TECHNOLOGIES CO., LTD.
Shenzhen, Guangdong 518129 (CN)**

(72) Inventors:
• **PENG, Xueming**
  **Shenzhen, Guangdong 518129 (CN)**
• **SHEN, Junqiang**
  **Shenzhen, Guangdong 518129 (CN)**
• **CHEN, Qi**
  **Shenzhen, Guangdong 518129 (CN)**

(74) Representative: **Gill Jennings & Every LLP
The Broadgate Tower
20 Primrose Street
London EC2A 2ES (GB)**

(56) References cited:
CN-A- 102 481 931    CN-A- 102 591 332
CN-A- 104 029 676    CN-A- 105 197 008
CN-A- 105 279 958    CN-A- 106 708 040
CN-A- 107 031 600    DE-A1-102015 002 155
US-A1- 2001 025 211    US-A1- 2005 228 580
US-A1- 2011 044 507    US-B1- 6 191 704

## Description

### TECHNICAL FIELD

This application relates to the field of signal processing technologies, and in particular, to a vehicle positioning method and a vehicle positioning apparatus.

### BACKGROUND

In a central city area or a tunnel, or on an irregular road, to complete lane-level driving planning and guiding, information about a vehicle relative to a surrounding road environment needs to be known, including local location information of the vehicle relative to the surrounding road environment and element information (such as a road curvature) of a road surrounding the vehicle.

Currently, vehicle positioning is completed mainly by using a global positioning system (global position system, GPS), real-time kinematic (real-time kinematic, RTK) positioning, a camera, a laser radar, and the like. A common vehicle positioning manner is to determine a possible location of the vehicle by jointly using a prestored map, GPS location information, and millimeter wave measurement information, and calculate a probability of the possible location at which the vehicle appears, to determine a specific location of the vehicle.

However, a coverage field of view of a forward radar installed on the vehicle is usually comparatively small. Consequently, it is difficult to accurately estimate a location relationship between the vehicle and a surrounding target on a structure-agnostic road (for example, a zigzag lane), and vehicle positioning accuracy is reduced.

US 2011/044507 A1 describes a method for determining relevant objects in a vehicle moving on a roadway. An assistance function is executed in relation to a position of a relevant object, and the relevant objects are determined on the basis of an image evaluation of images of a surrounding area of the vehicle. The images are detected by way of camera sensors. By way of a radar sensor positions of stationary objects in the surrounding area of the vehicle are determined. A profile of a roadway edge is determined using the positions of the stationary objects and that the image evaluation is carried out in relation to the roadway edge profile determined. A driver assistance system suitable for carrying out the method is also described.

US 2005/228580 A1 describes a method for travel course prediction in a motor vehicle having a position finding system for objects situated ahead of the vehicle is provided. In accordance with the method, a function describing the shape of the roadside is calculated on the basis of measured distance data and angle data for stationary roadside targets, wherein multiple stationary targets are identified and tracked. The path of the road is estimated for various subsets of the set of tracked stationary targets, under the assumption that these stationary targets are situated along the roadside, and roadside targets are differentiated from interfering objects on the basis of the plausibility of the resulting possible shapes of the roadside, the most probable shape of the roadside being determined on the basis of the roadside targets.

DE 102015002155 A1 describes a method for determining location information of a motor vehicle comprising a position and / or an orientation with regard to an available travel corridor in the direction of travel of the motor vehicle, with radar data describing the surroundings of the motor vehicle being recorded with at least one radar sensor, at least one unmoved feature describing the delimitation of the driving corridor is identified and localized in the radar data and is evaluated to determine driving corridor information describing the driving corridor in a vehicle coordinate system, the location information being derived from the driving corridor information.

US 2001/025211 A1 describes application of a transmission wave to a predetermined angular range in a width-wise direction of a vehicle. Object-unit data pieces containing at least data pieces representing distances to objects in correspondence with vehicle-width-wise direction angles are generated on the basis of a reflected wave. A determination is made as to whether each object is moving or stationary on the basis of a speed of the vehicle and a relative speed of the object. From the object-unit data pieces, ones are extracted which are effective for road shape recognition on the basis of a result of determining whether each object is moving or stationary. Ones of the extracted object-unit data pieces which represent monotonically increasing distances as viewed along one of clockwise and counterclockwise angle directions are grouped to generate data representing a road-side-object group. A road edge is recognized on the basis of the data representing the road-side-object group.

### SUMMARY

This application provides a vehicle positioning method and a vehicle positioning apparatus, to improve a positioning confidence level and positioning reliability during positioning in a central city area or a tunnel or on an irregular road. In addition, a vehicle planning and control system can be better assisted, based on road curvature information, in planning a driving track for a vehicle.

In view of this, a first aspect of this application provides a vehicle positioning method as set out in claim 1. The method can facilitate lane-level positioning in advanced assisted driving and automatic driving in a central city area or a tunnel or on an irregular road, thereby assisting in implementing better vehicle planning and control. The vehicle positioning method specifically includes the following several steps:

First, a vehicle positioning apparatus obtains measurement information within preset angle coverage at a current frame moment by using a measurement device, where the measurement information includes a plurality of pieces of static target information, the plurality of pieces of static target information are used to indicate information about a plurality of static targets, and the plurality of pieces of static target information have a one-to-one correspondence with the information about the plurality of static targets. A static target may usually be an object that does not move arbitrarily, such as a roadside tree, a guardrail, or traffic lights. Next, the vehicle positioning apparatus determines, based on the measurement information, current road boundary information corresponding to the current frame moment, and then determines first target positioning information based on the current road boundary information, where the first target positioning information is used to indicate a location of a target vehicle on a road. For example, it may be represented that a self-vehicle is located in the third lane from left to right in six lanes at the current moment.

Then, the vehicle positioning apparatus determines road curvature information based on the current road boundary information and historical road boundary information, where the road curvature information is used to indicate a bending degree of the road on which the target vehicle is located, the historical road boundary information includes road boundary information corresponding to at least one historical frame moment, and the historical frame moment is a moment that is before the current frame moment and at which the road boundary information and road curvature information are obtained. Calculation is performed based on information about the current frame moment and the historical frame moment, and a driving situation of the self-vehicle in a period of time is fully considered, so that an obtained result has higher reliability.

Finally, the vehicle positioning apparatus outputs the first target positioning information and the road curvature information by using an output device.

It can be learned that because the measurement device performs active measurement, the measurement device suffers little impact from light and climate within a visible range of the measurement device. In a central city area, a tunnel, or a culvert or in a non-ideal meteorological condition, the measurement device can be used to obtain location relationships between the vehicle and surrounding targets, to determine positioning information of the vehicle on the road. Therefore, a confidence level and reliability of the positioning information is improved. In addition, the road curvature information is determined based on these location relationships, and a bending degree of the lane in which the vehicle is located can be estimated based on the road curvature information. Therefore, vehicle positioning accuracy is improved. Vehicle planning and control are better assisted in lane-level positioning in advanced assisted driving or automatic driving.

In the vehicle positioning method, a vehicle positioning apparatus obtaining measurement information within preset angle coverage by using a measurement device includes the following steps:

the vehicle positioning apparatus first obtains tracking information of the plurality of static targets within the preset angle coverage by using millimeter wave radars, where the tracking information includes location information and speed information of the plurality of static targets in a radar coordinate system, and then calculates the measurement information based on the tracking information and calibration parameters of the millimeter wave radars, where the measurement information includes location information and speed information of the plurality of static targets in a vehicle coordinate system, and the calibration parameters include a rotation quantity and a translation quantity.

The radar coordinate system is a coordinate system used to obtain the tracking information, and the vehicle coordinate system is a coordinate system established by using the target vehicle as an origin.

It can be learned that a medium-long range millimeter wave radar and a short range millimeter wave radar are used to obtain the static target information and moving target information surrounding the vehicle. The millimeter wave radar has an extremely wide frequency band, is applicable to all types of broadband signal processing, further has angle identification and tracking capabilities, and has a comparatively wide Doppler bandwidth, a significant Doppler effect, and a high Doppler resolution. The millimeter wave radar has a short wavelength, accurately and finely illustrates a scattering characteristic of a target, and has comparatively high speed measurement precision.

In the vehicle positioning method, the preset angle coverage includes first preset angle coverage and second preset angle coverage;

the vehicle positioning apparatus obtaining tracking information of the plurality of static targets within the preset angle coverage by using millimeter wave radars includes the following steps:

the vehicle positioning apparatus obtains first tracking information of a plurality of first static targets within the first preset angle coverage by using a first millimeter wave radar, and obtains second tracking information of a plurality of second static targets within the second preset angle coverage by using a second millimeter wave radar, where the tracking information includes the first tracking information and the second tracking information, the plurality of static targets include the plurality of first static targets and the plurality of second static targets, the millimeter wave radars include the first millimeter wave radar and the second millimeter wave radar, and a detection distance and a coverage field of view of the first millimeter wave radar are different from a detection distance and a coverage field of view of the second millimeter wave radar; and

if the detection distance of the first millimeter wave radar is longer than the detection distance of the second millimeter wave radar, a coverage area of the second millimeter wave radar is larger than a coverage area of the first millimeter wave radar because a longer detection distance indicates a smaller coverage area; and on the contrary, if the detection distance of the first millimeter wave radar is shorter than the detection distance of the second millimeter wave radar, a coverage area of the second millimeter wave radar is smaller than a coverage area of the first millimeter wave radar because a shorter detection distance indicates a larger coverage area; and

the vehicle positioning apparatus calculating the measurement information based on the tracking information and calibration parameters of the millimeter wave radars includes the following steps:

the vehicle positioning apparatus calculates first measurement information within the first preset angle coverage based on the first tracking information and a calibration parameter of the millimeter wave radar, and calculates second measurement information within the second preset angle coverage based on the second tracking information and a calibration parameter of the millimeter wave radar, where the measurement information includes the first measurement information and the second measurement information.

It can be learned that in this embodiment of this application, it is proposed that the first millimeter wave radar and the second millimeter wave radar may be used to obtain different measurement information. This information obtaining manner does not require real-time kinematic positioning with high costs, images with a large data volume, and point cloud information, but mainly depends on information from the millimeter wave radars. For example, there are five millimeter wave radars, and each radar outputs a maximum of 32 targets. A data volume is only hundreds of kilobytes per second, and is far less than a data volume of a visual image and a data volume of a laser point cloud.

In a possible implementation of the first aspect in this embodiment of this application, the vehicle positioning apparatus may calculate the measurement information in the following manner:

$$(x_c, y_c) = R \times (x_r, y_r) + T \, ,$$

and

$$(V_{xc}, V_{yc}) = R \times (V_{xr}, V_{yr}) \, ,$$

where

$(x_c, y_c)$ represents location information of a static target in the vehicle coordinate system, $x_c$ represents an x-coordinate of the static target in the vehicle coordinate system, $y_c$ represents a y-coordinate of the static target in the vehicle coordinate system, $(x_r, y_r)$ represents location information of the static target in the radar coordinate system, $x_r$ represents an x-coordinate of the static target in the radar coordinate system, $y_r$ represents a y-coordinate of the static target in the radar coordinate system, R represents the rotation quantity, T represents the translation quantity, $(V_{xc}, V_{yc})$ represents speed information of the static target in the vehicle coordinate system, $V_{xc}$ represents a speed of the static target in an x-direction in the vehicle coordinate system, $V_{yc}$ represents a speed of the static target in a y-direction in the vehicle coordinate system, $(V_{xr}, V_{yr})$ represents speed information of the static target in the radar coordinate system, $V_{xr}$ represents a speed of the static target in an x-direction in the radar coordinate system, and $V_{yr}$ represents a speed of the static target in a y-direction in the radar coordinate system.

It can be learned that in this embodiment of this application, the measurement information in the radar coordinate system may be transformed into measurement information in the vehicle coordinate system, and both the location information and the speed information are correspondingly transformed, so that vehicle positioning can be completed from a perspective of the self-vehicle. Therefore, feasibility of the solution is improved.

In a possible implementation of the first aspect in this embodiment of this application, that the vehicle positioning apparatus determines road curvature information based on the road boundary information and historical road boundary information may include the following steps:

first, the vehicle positioning apparatus calculates an occupation probability of each grid unit in a grid area based on the road boundary information and the historical road boundary information, where the grid area covers the target vehicle, the grid area is used to trace the target vehicle, and the grid area includes a plurality of grid units; then, the vehicle positioning apparatus obtains a probability grid map based on the occupation probability of each grid unit in the grid area, and then determines fused boundary information based on a target grid unit in the probability grid map, where an occupation probability of the target grid unit is greater than a preset probability threshold, and the occupation probability of the target grid unit usually approaches 1; and finally, the vehicle positioning apparatus calculates the road curvature information based on the fused boundary information.

It can be learned that in this embodiment of this application, a local probability grid map of the vehicle may be obtained by fusing measurement information in a plurality of frames, road boundary information, and historical road boundary information, and the road curvature information may be calculated from the probability grid map. This helps improve feasibility of the solution.

In a possible implementation of the first aspect in this embodiment of this application, the vehicle positioning apparatus may calculate the occupation probability of each grid unit in the following manner:

$$p_n(x_c, y_c) = \min(p(x_c, y_c) + p_{n-1}(x_c, y_c), 1),$$

and

$$p(x_c, y_c) = \frac{1}{\sqrt{2|S|}} \exp(-\frac{1}{2}((x_c, y_c) - (x_c, y_c)')^T S^{-1}((x_c, y_c) - (x_c, y_c)')),$$

where

$p_n(x_c, y_c)$ represents an occupation probability of a grid unit in an $n$ th frame, $p(x_c, y_c)$ represents the road boundary information, $p_{n-1}(x_c, y_c)$ represents historical road boundary information in an $(n-1)$th frame, $x_c$ represents the x-coordinate of the static target in the vehicle coordinate system, $y_c$ represents the y-coordinate of the static target in the vehicle coordinate system, $(x_c, y_c)$ represents the location information of the static target in the vehicle coordinate system, $(x_c, y_c)'$ represents an average value of location information of the static target in the vehicle coordinate system in a plurality of frames, and S represents a covariance between $x_c$ and $y_c$.

It can be learned that in this embodiment of this application, local positioning may be performed based on the static target information obtained by the millimeter wave radars, and weighted averaging may be performed based on the calculated historical road boundary information and the calculated current road boundary information, to obtain stable road boundary information. Therefore, reliability of the solution is improved.

In a possible implementation of the first aspect in this embodiment of this application, the vehicle positioning apparatus may calculate the road curvature information in the following manner:

$$Q = \frac{\left| g_\theta''(x_c) \right|}{(1 + (g_\theta'(x_c))^2)^{3/2}},$$

where

$Q$ represents the road curvature information, $g_\theta(x_c)$ represents the fused boundary information, $g_\theta'(x_c)$ represents a first-order derivative of $g_\theta(x_c)$, and $g_\theta''(x_c)$ represents a second-order derivative of $g_\theta(x_c)$.

It can be learned that in this embodiment of this application, an implementation of calculating the road curvature information is provided, and required positioning information can be obtained in a specific calculation manner. Therefore, operability of the solution is improved.

In a possible implementation of the first aspect in this embodiment of this application, before determining, based on the measurement information, the current road boundary information corresponding to the current frame moment, the vehicle positioning apparatus may further perform the following steps:

the vehicle positioning apparatus first obtains candidate static target information and M pieces of reference static target information from the measurement information, where M is an integer greater than 1, and five pieces of reference static target information may usually be selected; and then calculates an average distance between the M pieces of reference static target information and the candidate static target information, where assuming that there are five reference static targets, an average distance is calculated based on distances between all the reference static targets and a candidate static target; and

the vehicle positioning apparatus removes the candidate static target information from the measurement information if the calculated average distance does not meet a preset static target condition; where the candidate static target information is any one of the plurality of pieces of static target information, and the reference static target information is static target information with a distance to the candidate static target information less than a preset distance, in the plurality of pieces of static target information.

It can be learned that in this embodiment of this application, the candidate static target information that does not meet the preset static target condition may be removed, and remaining static target information that meets the requirement is used for subsequent positioning calculation and road boundary information calculation. The foregoing manner can effectively improve calculation accuracy.

In a possible implementation of the first aspect in this embodiment of this application, the vehicle positioning apparatus may calculate the average distance in the following manner:

$$d = \frac{1}{M}\sum_{i=1}^{M}\sqrt{(P-P_i)^2} \, ,$$

where

d represents the average distance, M represents a quantity of pieces of the reference static information, P represents location information of the candidate static target information, $P_i$ represents location information of an $i^{th}$ piece of reference static information, and $i$ is an integer greater than 0 and less than or equal to M.

It can be learned that in this embodiment of this application, a manner of calculating the average distance is described. The average distance calculated in this manner has comparatively high reliability and is operable.

In a possible implementation of the first aspect in this embodiment of this application, that the vehicle positioning apparatus removes the candidate static target information from the measurement information if the average distance does not meet a preset static target condition may include the following steps:

if the calculated average distance is greater than a threshold, the vehicle positioning apparatus determines that the average distance does not meet the preset static target condition, and then removes the candidate static target information from the measurement information.

It can be learned that in this embodiment of this application, the candidate static target information with the average distance greater than the threshold may be removed, and remaining static target information that meets the requirement is used for subsequent positioning calculation and road boundary information calculation. The foregoing manner can effectively improve calculation accuracy.

In a possible implementation of the first aspect in this embodiment of this application, the vehicle positioning apparatus may calculate the road boundary information in the following manner:

$$f_\theta(x_c) = \theta_0 + \theta_1 \times x_c + \theta_2 \times x_c^2 + \theta_3 \times x_c^3 \, ,$$

and

$$\forall (x_c, y_c), f_\theta : \min\left[\sum (f_\theta(x_c) - y_c)^2 + \lambda \sum \theta_j^2\right],$$

where

$f_\theta(x_c)$ represents the road boundary information, $\theta_0$ represents a first coefficient, $\theta_1$ represents a second coefficient, $\theta_2$ represents a third coefficient, $\theta_3$ represents a fourth coefficient, $x_c$ represents the x-coordinate of the static target in the vehicle coordinate system, $y_c$ represents the y-coordinate of the static target in the vehicle coordinate system, $(x_c, y_c)$ represents the location information of the static target in the vehicle coordinate system, $\lambda$ represents a regularization coefficient, $\theta_j$ represents a $j^{th}$ coefficient, and j is an integer greater than or equal to 0 and less than or equal to 3.

It can be learned that in this embodiment of this application, a manner of calculating the road boundary information is described. The road boundary information calculated in this manner has comparatively high reliability and is operable.

In a possible implementation of the first aspect in this embodiment of this application, that the vehicle positioning apparatus determines first target positioning information based on the road boundary information corresponding to the current frame moment may include the following steps:

the vehicle positioning apparatus first calculates stability augmented boundary information at the current frame moment based on the current road boundary information and the historical road boundary information, and then obtains a first distance from the target vehicle to a left road boundary and a second distance from the target vehicle to a right road boundary based on the stability augmented boundary information at the current frame moment; and finally, the vehicle positioning apparatus calculates the first target positioning information at the current frame moment based on the first distance and the second distance, where

a relationship between the stability augmented boundary information and the fused boundary information is similar to a relationship between a "line" and a "plane", and a plurality of pieces of stability augmented boundary information can be used to obtain one piece of fused boundary information.

It can be learned that in this embodiment of this application, the fused boundary information at the current frame moment may be calculated based on the road boundary information corresponding to the current frame moment and the historical road boundary information, the first distance from the vehicle to the left road boundary and the second distance from the vehicle to the right road boundary may be obtained based on the fused boundary information at the current frame moment, and the first target positioning information at the current frame moment may be finally calculated based on the first distance and the second distance. The foregoing manner can improve reliability of the first target positioning information, provides a feasible manner for implementing the solution, and therefore improves flexibility of the solution.

In a possible implementation of the first aspect in this embodiment of this application, the vehicle positioning apparatus may calculate, in the following manner, the stability augmented boundary information corresponding to the current frame moment:

$$f_\theta^{'} = \sum \frac{\left| f_{\theta\_w}(x_c) - \mu \right|}{\sum \left| f_{\theta\_w}(x_c) - \mu \right|} f_{\theta\_w}(x_c), w \in [1, W],$$

where

$f_\theta^{'}$ represents the stability augmented boundary information corresponding to the current frame moment, $f_{\theta\_w}(x_c)$ represents historical road boundary information corresponding to a $w$th frame, W represents a quantity of pieces of the historical road boundary information, $x_c$ represents the x-coordinate of the static target in the vehicle coordinate system, and $\mu$ represents an average value of historical road boundary information in the W frames.

It can be learned that in this embodiment of this application, a manner of calculating the stability augmented boundary information is described. The fused boundary information calculated in this manner has comparatively high reliability and is operable.

In a possible implementation of the first aspect in this embodiment of this application, the vehicle positioning apparatus may calculate the first target positioning information at the current frame moment in the following manner:

$$Location = \left( ceil\left( R_R - D \right), ceil\left( R_L - D \right) \right),$$

and

$$D = \left( R_L + R_R \right) / N,$$

where

*Location* represents the first target positioning information at the current frame moment, *ceil* represents a rounding-up calculation manner, $R_L$ represents the first distance from the target vehicle to the left road boundary, $R_R$ represents the second distance from the target vehicle to the right road boundary, D represents a lane width, and N represents a quantity of lanes.

It can be learned that in this embodiment of this application, a manner of calculating the first target positioning information is described. The first target positioning information calculated in this manner has comparatively high reliability and is operable.

In a possible implementation of the first aspect in this embodiment of this application, the measurement information may further include at least one piece of moving target information, and before the vehicle positioning apparatus determines the first target positioning information based on the current road boundary information, the method may further include the following steps:

first, the vehicle positioning apparatus obtains the at least one piece of moving target information from the measurement information, where each piece of moving target information carries a target sequence number, the target sequence number is used to identify a different moving target, and a moving target is usually a vehicle that is moving on the road, and certainly may also be a bike, a motorcycle, or another type of motor vehicle; and

then the vehicle positioning apparatus determines lane occupation information based on the at least one piece of moving target information and corresponding historical moving target information, and finally determines, based on the lane occupation information, second target positioning information corresponding to the current frame moment, where the second target positioning information is used to indicate the location of the target vehicle on the road.

It can be learned that in this embodiment of this application, the millimeter wave radars simultaneously obtain the plurality of pieces of static target information and the moving target information, and calculate the road boundary information based on the static target information and the moving target information, to implement vehicle positioning. The moving target information may be used to assist the static target information, to calculate the road boundary information, so that accurate vehicle positioning can be completed when a vehicle flow is comparatively heavy. Therefore, feasibility and flexibility of the solution are improved, and a positioning confidence level is improved.

In a possible implementation of the first aspect in this embodiment of this application, that the vehicle positioning apparatus determines lane occupation information based on the at least one piece of moving target information at the current frame moment and corresponding historical moving target information may include the following steps:

first, the vehicle positioning apparatus obtains moving target information data in K frames based on the at least one piece of moving target information and the historical moving target information corresponding to the at least one piece of moving target information, where K is a positive integer, and then obtains an occupation status of a lane $L_k$ in k frames based on the at least one piece of moving target information and the historical moving target information corresponding to the at least one piece of moving target information, where k is an integer greater than 0 and less than or equal to K; and

if a lane occupation ratio is less than a preset ratio, the vehicle positioning apparatus may determine that the lane $L_k$ is occupied, where the lane occupation ratio is a ratio of the k frames to the K frames; or on the contrary, if the lane occupation ratio is greater than or equal to the preset ratio, the vehicle positioning apparatus may determine that the lane $L_k$ is unoccupied, and may further determine the unoccupied lane $L_k$ as the second target positioning information corresponding to the current frame moment.

It can be learned that in this embodiment of this application, the moving target information data in the K frames is obtained based on the at least one piece of moving target information at the current frame moment and the historical moving target information corresponding to the at least one piece of moving target information, and the occupation status of the lane $L_k$ in the k images is obtained based on the moving target information at the current frame moment and the historical moving target information. The foregoing manner can be used to determine the occupation status of the lane more accurately. Therefore, practical applicability and reliability of the solution are improved.

In a possible implementation of the first aspect in this embodiment of this application, that the vehicle positioning apparatus determines first target positioning information based on the road boundary information corresponding to the current frame moment may include the following steps:

first, the vehicle positioning apparatus determines a confidence level of the first target positioning information based on the second target positioning information, where the confidence level is used to indicate a trusted degree of the first target positioning information, and the confidence level may be represented by a percentage; and then, the vehicle positioning apparatus determines the first target positioning information at the current moment based on the confidence level.

If the confidence level is extremely low, it is likely that positioning fails. In this case, repositioning may be performed, or an alarm notification may be triggered.

It can be learned that in this embodiment of this application, the second target positioning information determined based on the moving target information may be used to determine the confidence level of the first target positioning information, where the confidence level indicates a trusted degree of interval estimation. Therefore, feasibility and practical applicability of fusion positioning are improved.

A second aspect of this application provides a vehicle positioning apparatus as set out in claim 7.

In a possible implementation of the second aspect in this embodiment of this application,

the obtaining module is specifically configured to calculate the measurement information in the following manner:

$$\left(x_c, y_c\right) = R \times \left(x_r, y_r\right) + T \, ,$$

and

$$\left(V_{xc},V_{yc}\right)=R\times\left(V_{xr},V_{yr}\right),$$

where

$(x_c,y_c)$ represents location information of a static target in the vehicle coordinate system, $x_c$ represents an x-coordinate of the static target in the vehicle coordinate system, $y_c$ represents a y-coordinate of the static target in the vehicle coordinate system, $(x_r,y_r)$ represents location information of the static target in the radar coordinate system, $x_r$ represents an x-coordinate of the static target in the radar coordinate system, $y_r$ represents a y-coordinate of the static target in the radar coordinate system, $R$ represents the rotation quantity, $T$ represents the translation quantity, $(V_{xc},V_{yc})$ represents speed information of the static target in the vehicle coordinate system, $V_{xc}$ represents a speed of the static target in an x-direction in the vehicle coordinate system, $V_{yc}$ represents a speed of the static target in a y-direction in the vehicle coordinate system, $(V_{xr},V_{yr})$ represents speed information of the static target in the radar coordinate system, $V_{xr}$ represents a speed of the static target in an x-direction in the radar coordinate system, and $V_{yr}$ represents a speed of the static target in a y-direction in the radar coordinate system.

In a possible implementation of the second aspect in this embodiment of this application,

the determining module is specifically configured to: calculate an occupation probability of each grid unit in a grid area based on the road boundary information and the historical road boundary information, where the grid area covers the target vehicle, and the grid area includes a plurality of grid units;
obtain a probability grid map based on the occupation probability of each grid unit in the grid area;
determine fused boundary information based on a target grid unit in the probability grid map, where an occupation probability of the target grid unit is greater than a preset probability threshold; and
calculate the road curvature information based on the fused boundary information.

In a possible implementation of the second aspect in this embodiment of this application, the determining module is specifically configured to calculate the occupation probability of each grid unit in the following manner:

$$p_n(x_c,y_c)=\min(p(x_c,y_c)+p_{n-1}(x_c,y_c),1),$$

and

$$p(x_c,y_c)=\frac{1}{\sqrt{2|S|}}\exp(-\frac{1}{2}((x_c,y_c)-(x_c,y_c)')^T S^{-1}((x_c,y_c)-(x_c,y_c)')),$$

where

$p_n(x_c,y_c)$ represents an occupation probability of a grid unit in an $n^{th}$ frame, $p(x_c,y_c)$ represents the road boundary information, $p_{n-1}(x_c,y_c)$ represents historical road boundary information in an $(n-1)^{th}$ frame, $x_c$ represents the x-coordinate of the static target in the vehicle coordinate system, $y_c$ represents the y-coordinate of the static target in the vehicle coordinate system, $(x_c,y_c)$ represents the location information of the static target in the vehicle coordinate system, $(x_c,y_c)'$ represents an average value of location information of the static target in the vehicle coordinate system in a plurality of frames, and $S$ represents a covariance between $x_c$ and $y_c$.

In a possible implementation of the second aspect in this embodiment of this application, the determining module is specifically configured to calculate the road curvature information in the following manner:

$$Q=\frac{\left|g_\theta{}''(x_c)\right|}{(1+(g_\theta{}'(x_c))^2)^{3/2}},$$

where

$Q$ represents the road curvature information, $g_\theta(x_c)$ represents the fused boundary information, $g_\theta'(x_c)$ represents a first-order derivative of $g_\theta(x_c)$, and $g_\theta''(x_c)$ represents a second-order derivative of $g_\theta(x_c)$.

In a possible implementation of the second aspect in this embodiment of this application, the vehicle positioning apparatus further includes a calculation module and a removal module; where

the obtaining module is further configured to: before the determining module determines, based on the measurement information, the current road boundary information corresponding to the current frame moment, obtain candidate static target information and M pieces of reference static target information from the measurement information, where M is an integer greater than 1;

the calculation module is configured to calculate an average distance between the M pieces of reference static target information and the candidate static target information that are obtained by the obtaining module; and

the removal module is configured to: remove the candidate static target information from the measurement information if the average distance calculated by the calculation module does not meet a preset static target condition; where

the candidate static target information is any one of the plurality of pieces of static target information, and the reference static target information is static target information with a distance to the candidate static target information less than a preset distance, in the plurality of pieces of static target information.

In a possible implementation of the second aspect in this embodiment of this application, the calculation module is specifically configured to calculate the average distance in the following manner:

$$d = \frac{1}{M}\sum_{i=1}^{M}\sqrt{(P-P_i)^2} \ ,$$

where

$d$ represents the average distance, $M$ represents a quantity of pieces of the reference static information, $P$ represents location information of the candidate static target information, $P_i$ represents location information of an $i^{th}$ piece of reference static information, and $i$ is an integer greater than 0 and less than or equal to $M$.

In a possible implementation of the second aspect in this embodiment of this application, the removal module is specifically configured to: if the average distance is greater than a threshold, determine that the average distance does not meet the preset static target condition, and remove the candidate static target information from the measurement information.

In a possible implementation of the second aspect in this embodiment of this application, the determining module is specifically configured to calculate the road boundary information in the following manner:

$$f_{\theta}\left(x_c\right) = \theta_0 + \theta_1 \times x_c + \theta_2 \times x_c^2 + \theta_3 \times x_c^3 \ ,$$

and

$$\forall (x_c, y_c), f_{\theta} : \min\left[\sum (f_{\theta}(x_c) - y_c)^2 + \lambda \sum \theta_j^2\right],$$

where

$f_{\theta}(x_c)$ represents the road boundary information, $\theta_0$ represents a first coefficient, $\theta_1$ represents a second coefficient, $\theta_2$ represents a third coefficient, $\theta_3$ represents a fourth coefficient, $x_c$ represents the x-coordinate of the static target in the vehicle coordinate system, $y_c$ represents the y-coordinate of the static target in the vehicle coordinate system, $(x_c, y_c)$ represents the location information of the static target in the vehicle coordinate system, $\lambda$ represents a regularization coefficient, $\theta_j$ represents a $j^{th}$ coefficient, and j is an integer greater than or equal to 0 and less than or equal to 3.

In a possible implementation of the second aspect in this embodiment of this application,

the determining module is specifically configured to: calculate stability augmented boundary information at the current frame moment based on the current road boundary information and the historical road boundary information; obtain a first distance from the target vehicle to a left road boundary and a second distance from the target vehicle to a right road boundary based on the stability augmented boundary information at the current frame moment; and calculate the first target positioning information at the current frame moment based on the first distance and the second distance.

In a possible implementation of the second aspect in this embodiment of this application, the determining module is specifically configured to calculate, in the following manner, the stability augmented boundary information corresponding to the current frame moment:

$$f_\theta^{'} = \sum \frac{\left| f_{\theta\_w}(x_c) - \mu \right|}{\sum \left| f_{\theta\_w}(x_c) - \mu \right|} f_{\theta\_w}(x_c), w \in [1, W],$$

where

$f_\theta^{'}$ represents the stability augmented boundary information corresponding to the current frame moment, $f_{\theta\_w}(x_c)$ represents historical road boundary information corresponding to a $W^{th}$ frame, W represents a quantity of pieces of the historical road boundary information, $x_c$ represents the x-coordinate of the static target in the vehicle coordinate system, and $\mu$ represents an average value of historical road boundary information in the W frames.

In a possible implementation of the second aspect in this embodiment of this application, the determining module is specifically configured to calculate the first target positioning information at the current frame moment in the following manner:

$$Location = \left( ceil\left( R_R - D \right), ceil\left( R_L - D \right) \right),$$

and

$$D = \left( R_L + R_R \right) / N,$$

where

*Location* represents the first target positioning information at the current frame moment, *ceil* represents a rounding-up calculation manner, $R_L$ represents the first distance from the target vehicle to the left road boundary, $R_R$ represents the second distance from the target vehicle to the right road boundary, D represents a lane width, and N represents a quantity of lanes.

In a possible implementation of the second aspect in this embodiment of this application, the measurement information further includes at least one piece of moving target information;

the obtaining module is further configured to: before the determining module determines the first target positioning information based on the current road boundary information, obtain the at least one piece of moving target information from the measurement information, where each piece of moving target information carries a target sequence number, and the target sequence number is used to identify a different moving target;

the determining module is further configured to determine lane occupation information based on the at least one piece of moving target information obtained by the obtaining module and corresponding historical moving target information; and

the determining module is further configured to determine, based on the lane occupation information, second target positioning information corresponding to the current frame moment, where the second target positioning information is used to indicate the location of the target vehicle on the road.

In a possible implementation of the second aspect in this embodiment of this application,

the obtaining module is specifically configured to: obtain moving target information data in *K* frames based on the at least one piece of moving target information and the historical moving target information corresponding to the at least one piece of moving target information, where *K* is a positive integer;

obtain an occupation status of a lane $L_k$ in *k* frames based on the at least one piece of moving target information and the historical moving target information corresponding to the at least one piece of moving target information, where *k* is an integer greater than 0 and less than or equal to *K*; and

if a lane occupation ratio is less than a preset ratio, determine that the lane $L_k$ is occupied, where the lane occupation ratio is a ratio of the *k* frames to the *K* frames; or

if the lane occupation ratio is greater than or equal to the preset ratio, determine that the lane $L_k$ is unoccupied; and

the determining module is specifically configured to determine the unoccupied lane $L_k$ as the second target positioning information corresponding to the current frame moment.

In a possible implementation of the second aspect in this embodiment of this application,

the determining module is specifically configured to: determine a confidence level of the first target positioning information based on the second target positioning information, where the confidence level is used to indicate a trusted degree of the first target positioning information; and

determine the first target positioning information at the current moment based on the confidence level.

A third aspect of this application provides a vehicle positioning apparatus, and the vehicle positioning apparatus may include a memory, a transceiver, a processor, and a bus system, where

the memory is configured to store a program and an instruction;

the transceiver is configured to receive or send information under control of the processor;

the processor is configured to execute the program in the memory;

the bus system is configured to connect the memory, the transceiver, and the processor, so that the memory, the transceiver, and the processor communicate with each other; and

the processor is configured to invoke the program and the instruction in the memory, and perform a method according to the first aspect.

According to a fourth aspect, an embodiment of this application provides a computer readable storage medium, configured to store a computer software instruction used in the foregoing method. When the computer software instruction is run on a computer, the computer is enabled to perform the method in any one of the foregoing aspects.

According to a fifth aspect, an embodiment of this application provides a computer program product including an instruction. When the computer program product is run on a computer, the computer is enabled to perform the method in any one of the foregoing aspects.

In addition, for technical effects brought by any design manner in the second aspect to the fifth aspect, refer to the technical effects brought by different design manners in the first aspect. Details are not described herein again.

It can be learned from the foregoing technical solutions that this application has the following advantages:

In the embodiments of this application, the vehicle positioning method is provided. First, the vehicle positioning apparatus obtains the measurement information within the preset angle coverage by using the millimeter wave radars, where the measurement information includes the plurality of pieces of static target information; then, the vehicle positioning apparatus determines, based on the measurement information, the road boundary information corresponding to the current frame moment, and the vehicle positioning apparatus determines the first target positioning information based on the road boundary information corresponding to the current frame moment, where the first target positioning information is used to indicate the location of the vehicle in the lane; finally, the vehicle positioning apparatus determines the road curvature information based on the road boundary information and the historical road boundary information, where the road curvature information is used to indicate the bending degree of the road on which the vehicle is located, the historical road boundary information includes the road boundary information corresponding to the at least one historical frame moment, and the historical frame moment is the moment that is before the current frame moment and at which the road boundary information and the road curvature information are obtained. In the foregoing manner, because the millimeter wave radar performs active measurement, the millimeter wave radar suffers little impact from light and climate within a visible range of the millimeter wave radar. In a central city area, a tunnel, or a culvert or in a non-ideal meteorological condition, the millimeter wave radar can be used to obtain location relationships between the vehicle and surrounding targets, to determine positioning information of the vehicle on the road. Therefore, a confidence level and reliability of the positioning information is improved. In addition, the road curvature information is determined based on these location relationships, and a bending degree of the lane in which the vehicle is located can be estimated based on the road curvature information. Therefore, vehicle positioning accuracy is improved.

## BRIEF DESCRIPTION OF DRAWINGS

To describe the technical solutions in the embodiments of this application more clearly, the following briefly describes the accompanying drawings required for describing the embodiments. The accompanying drawings in the following descriptions show merely some embodiments of this application.

FIG. 1 is a schematic architectural diagram of a vehicle positioning system according to an embodiment of this application;

FIG. 2 is a schematic diagram of a product implementation of a vehicle positioning apparatus according to an embodiment of this application;

FIG. 3 is a schematic core flowchart of a vehicle positioning method according to an embodiment of this application;

FIG. 4 is a schematic diagram of an embodiment of a vehicle positioning scenario according to an embodiment of this application;

FIG. 5 is a schematic diagram of an embodiment of a vehicle positioning method according to an embodiment of this application;

FIG. 6 is a schematic diagram of a scenario in which a millimeter wave radar obtains a target according to an embodiment of this application;

FIG. 7 is a schematic diagram of a millimeter wave radar coordinate system and a vehicle coordinate system according to an embodiment of this application;

FIG. 8 is a schematic diagram of a procedure for obtaining measurement information within preset angle coverage according to an embodiment of this application;

FIG. 9 is a schematic diagram of a procedure for constructing a probability grid map according to an embodiment of this application;

FIG. 10 is a schematic diagram of a probability grid map according to an embodiment of this application;

FIG. 11 is a schematic diagram of a result of constructing a probability grid map according to an embodiment of this application;

FIG. 12 is a schematic diagram of a procedure in which a millimeter wave radar positions static target information according to an embodiment of this application;

FIG. 13 is a schematic diagram of determining abnormal candidate static target information according to an embodiment of this application;

FIG. 14 is a schematic diagram of another embodiment of a vehicle positioning method according to an embodiment of this application;

FIG. 15 is a schematic diagram of a procedure in which a millimeter wave radar positions moving target information according to an embodiment of this application;

FIG. 16 is a schematic diagram of a lane occupied by moving target information according to an embodiment of this application;

FIG. 17 is a schematic diagram of fusing static target information and moving target information by a millimeter wave radar according to an embodiment of this application;

FIG. 18 is a schematic diagram of an embodiment of a vehicle positioning apparatus according to an embodiment of this application;

FIG. 19 is a schematic diagram of another embodiment of a vehicle positioning apparatus according to an embodiment of this application; and

FIG. 20 is a schematic structural diagram of a vehicle positioning apparatus according to an embodiment of this application.

## DESCRIPTION OF EMBODIMENTS

This application provides a vehicle positioning method and a vehicle positioning apparatus, to improve a positioning confidence level and positioning reliability during positioning in a central city area or a tunnel or on an irregular road. In addition, a vehicle planning and control system can be better assisted, based on road curvature information, in planning a driving track for a vehicle.

In the specification, claims, and accompanying drawings of this application, the terms "first", "second", "third", "fourth", and the like (if any) are intended to distinguish between similar objects but do not necessarily indicate a specific order or sequence. It should be understood that data termed in such a way are interchangeable in proper circumstances so that the embodiments of this application described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

It should be understood that this application may be applied to a central city area, a tunnel, or an irregular road. To complete lane-level driving planning and guiding, a self-vehicle needs to know information about the vehicle relative to a surrounding road environment, including local location information of the vehicle relative to the surrounding road environment and element information (such as a road curvature) of a road surrounding the vehicle. The vehicle may perceive an ambient environment of the vehicle by using an in-vehicle sensor, and control a driving direction and a speed of the vehicle based on information that is about a road, a location of the vehicle, and an obstacle and that is obtained through perception, so that the vehicle can run on the road safely and reliably.

It may be understood that, during actual application, this application is not only applied to driving of a vehicle, but also applied to piloting of an airplane or a ship, so that the plane or the ship can run on a navigation channel. A curvature is calculated and positioning is implemented based on measurement information obtained by a millimeter wave radar, and positioning accuracy is improved. This application is mainly described from a perspective of vehicle positioning. However, this should not be construed as a limitation on an application scope of this application. The following describes an architecture of a vehicle positioning system.

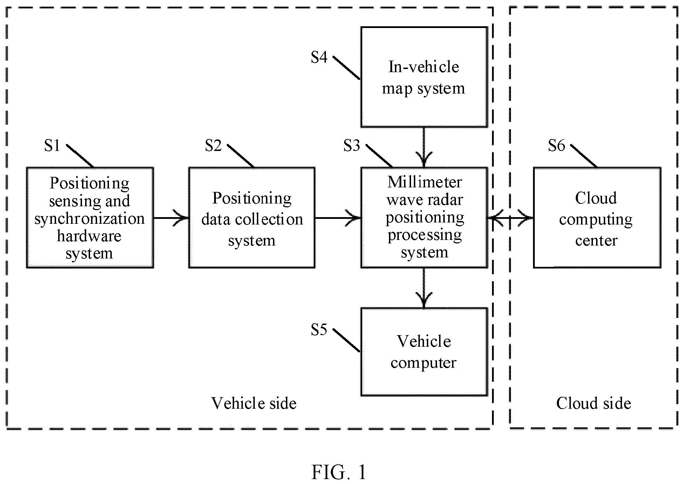

FIG. 1 is a schematic architectural diagram of a vehicle positioning system according to an embodiment of this application. As shown in FIG. 1, a positioning sensing and synchronization hardware system S1 includes a sensor and a synchronization unit that need to be used for positioning in this application. The sensor specifically includes an initialization global positioning system (global positioning system, GPS) receiver and a millimeter wave radar sensor. A positioning data collection system S2 collects data of the positioning sensor and synchronization data from the positioning sensing and synchronization hardware system S1, and sends the data of the positioning sensor and the synchronization data to a millimeter wave radar positioning processing system S3 on a vehicle side. A processor on the vehicle side may perform local positioning and construction of a probability grid map in this application by using an in-vehicle map system S4, and send a positioning result to a vehicle computer S5 for subsequent driving planning and use.

Optionally, the processor on the vehicle side may further transmit the data of the positioning sensor and the synchronization data to a cloud computing center S6 by using a vehicle gateway. The cloud computing center S6 performs local vehicle positioning and construction of the probability grid map based on a cloud map, and transfers information to the millimeter wave radar positioning processing system S3 by using the vehicle gateway. Then, the millimeter wave radar positioning processing system S3 proceeds to transfer the information to the vehicle computer S5 for driving planning.

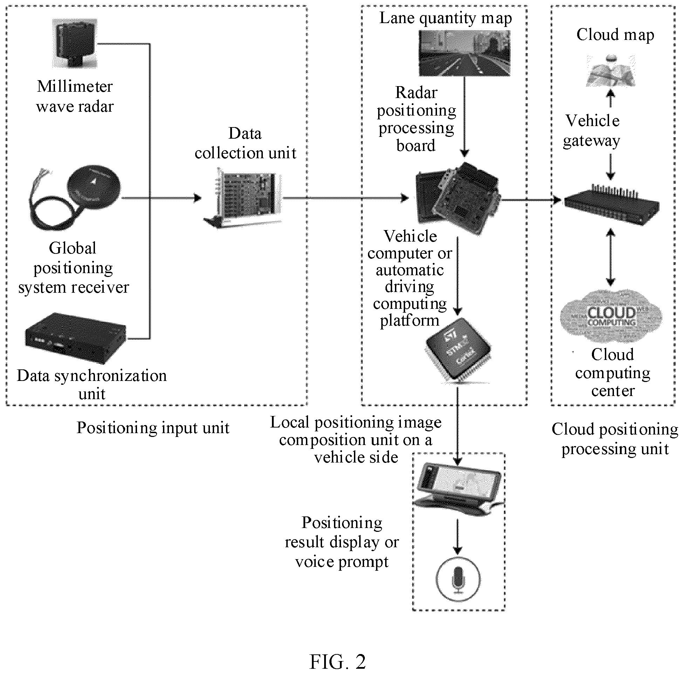

With reference to the vehicle positioning system described in FIG. 1, FIG. 2 is a schematic diagram of a product implementation of a vehicle positioning apparatus according to an embodiment of this application. As shown in FIG. 2, in this application, a GPS receiver needs to be used to provide an initial reference location in a positioning process; and a medium-long range millimeter wave radar, a short range millimeter wave radar, a lane quantity map, and a positioning algorithm processing device need to be used in a local positioning process. To be specific, the schematic diagram of the product implementation is shown in FIG. 2.

Specifically, the product implementation mainly includes the following components:

(1) The GPS receiver is configured to receive a GPS signal, and provide an initial reference location for vehicle positioning. The GPS receiver is an instrument for receiving a GPS satellite signal and determining a spatial location on the ground. A navigation positioning signal sent by the GPS satellite is an information resource that may be shared by a large quantity of users. Receiving devices, namely, GPS signal receivers, that are owned by a large quantity of users on the land and in the ocean and the air and that can receive, track, transform, and measure GPS signals may obtain coarse positioning results (with precision from several meters to tens of meters) by resolving the received GPS signals.

(2) The medium-long range millimeter wave radar and the short range millimeter wave radar are used to obtain static target information and moving target information surrounding a vehicle. The millimeter wave radar further has the following features:

the millimeter wave radar has an extremely wide frequency band and is applicable to all types of broadband signal processing;

the millimeter wave radar has a wide beam used to implement dual-channel/multi-channel angle measurement, and has angle identification and tracking capabilities; and

the millimeter wave radar has a comparatively wide Doppler bandwidth, a significant Doppler effect, and a high Doppler resolution, and the millimeter wave radar has a short wavelength, accurately and finely illustrates a scattering characteristic of a target, and has comparatively high speed measurement precision.

(3) The lane quantity map is used to provide lane quantity information on a road.

(4) A data synchronization unit is configured to provide synchronization information for the medium-long range millimeter wave radar, the short range millimeter wave radar, and the lane quantity map, to keep information integrity and consistency.

(5) A data collection device is configured to collect target information from the forward medium-long range millimeter wave radar, target information from the short range millimeter wave radars at four corners of the vehicle, information from the GPS receiver, and synchronization timestamp information.

(6) A radar positioning processing board is configured to complete local positioning and construction of a probability grid map based on millimeter wave radars in all directions. The radar positioning processing board includes but is not limited to a digital signal processor that meets a vehicle grade, such as digital signal processing (digital signal processing, DSP), a field programmable logic gate array (field programmable gate array, FPGA), and a micro control unit (micro control unit, MCU).

(7) A vehicle computer or an automatic driving computing platform is configured to: receive positioning information transmitted by the radar positioning processing board, and plan driving. For example, the automatic driving computing platform shares some calculation operations in the positioning processing when a processing capability of the radar processing board is limited.

(8) A cloud map is road map information stored on a cloud side.

(9) A vehicle gateway is configured to provide an information transfer channel used for positioning information exchange between the radar and the cloud side.

(10) A cloud computing center is configured to complete, on the cloud side, calculation processing in the local positioning and the construction of a probability grid map based on the millimeter wave radars.

(11) A positioning result display or voice prompt is configured to transfer a positioning result from the vehicle side to a navigator by using the vehicle computer, to remind a driver in a display manner and/or a voice manner during navigation, and may be applied to an assisted driving scenario.

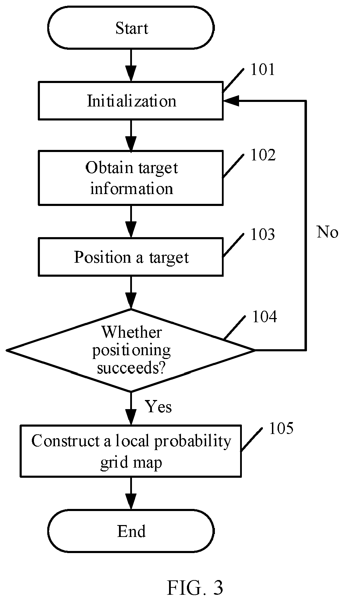

Based on the foregoing architecture of the vehicle positioning system and the foregoing product implementation of the vehicle positioning apparatus, a vehicle positioning method provided in this application is shown in FIG. 3. FIG. 3 is a schematic core flowchart of a vehicle positioning method according to an embodiment of this application. As shown in FIG. 3, details are as follows:

Step 101: When vehicle positioning is started, initialization of local vehicle positioning may be completed by inputting an initial location provided by a GPS and a lane quantity map.

Step 102: Start a medium-long range millimeter wave radar and a short range millimeter wave radar installed on a vehicle, and transform, from a radar coordinate system to a vehicle coordinate system, data that is collected by the medium-long range millimeter wave radar and the short range millimeter wave radar at a frame interval, to obtain target information from the millimeter wave radars in all directions.

Step 103 to step 105 are core steps in this application. Step 103: Based on static target information in targets obtained by using the millimeter wave radars in all the directions, remove an abnormal isolated target, solve optimal road boundary information, perform weighting on the optimal road boundary information and historical road boundary information, and then implement static target positioning based on the lane quantity map; and determine a lane occupation status based on moving target information and historical moving target information in the targets obtained by using the millimeter wave radars in all the directions, and integrate the lane quantity map and lane occupation information to complete moving target positioning. A static target positioning result is fused with a moving target positioning result, to obtain a local vehicle positioning result.

Step 104: Determine, based on the positioning result obtained in step 103, whether the local vehicle positioning succeeds; if the positioning succeeds, perform step 105; otherwise, if the positioning fails, return to perform step 101 to start repositioning.

Step 105: After the positioning succeeds, fuse static target information in a plurality of frames with the road boundary information determined in the positioning, calculate a grid occupation probability based on the target information obtained through measurement by using the radars and prediction of the radars, construct a probability grid map for an area surrounding a self-vehicle, and calculate road boundary curvature information in a road grid probability map.

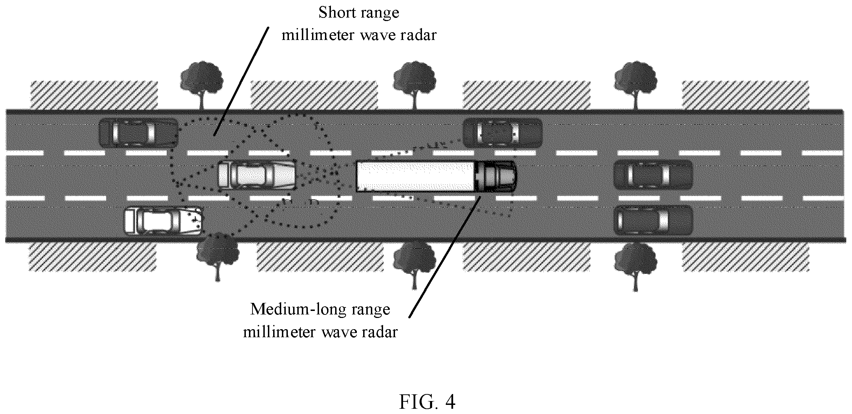

For ease of understanding, FIG. 4 is a schematic diagram of an embodiment of a vehicle positioning scenario according to an embodiment of this application. As shown in FIG. 4, for a vehicle that requires positioning, a medium-long range millimeter wave radar installed in front of the vehicle and short range millimeter wave radars installed at four corners provide the vehicle with input of information obtained through measurement by using the millimeter wave radars in all the directions. The medium-long range millimeter wave radar is a collective term of a medium range millimeter wave radar (medium range radar, MRR) and a long range millimeter wave radar (long range radar, LRR). The short range millimeter wave radar (short range radar, SRR) obtains, through measurement, location information of targets surrounding the vehicle.

The following describes a vehicle positioning method in this application with reference to embodiments and accompanying drawings. The vehicle positioning method provided in this application may include the following two embodiments. Details are as follows:

Embodiment 1: Vehicle positioning is completed based on a plurality of pieces of static target information.

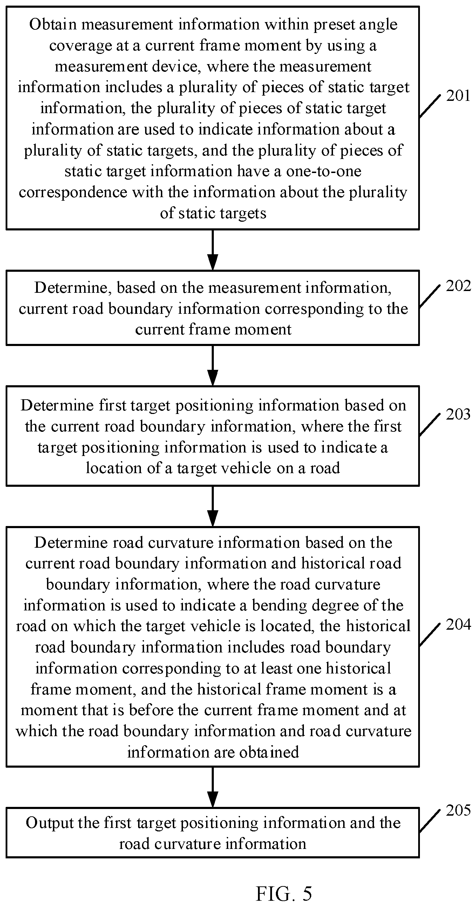

FIG. 5 is a schematic diagram of an embodiment of a vehicle positioning method according to an embodiment of this application. As shown in FIG. 5, the embodiment of the vehicle positioning method in this embodiment of this application includes the following steps.

201. Obtain measurement information within preset angle coverage at a current frame moment by using a measurement device, where the measurement information includes a plurality of pieces of static target information, the plurality of pieces of static target information are used to indicate information about a plurality of static targets, and the plurality of pieces of static target information have a one-to-one correspondence with the information about the plurality of static targets.

In this embodiment, after local positioning is started, the vehicle positioning apparatus may first respond to a local positioning start instruction, then obtain a signal from a GPS receiver, a lane quantity map, and a signal of a synchronization unit, and send, to a vehicle data collection unit, information obtained after synchronization; and the vehicle positioning apparatus collects initial local positioning information from the data collection unit.

The vehicle positioning apparatus obtains the measurement information within the preset angle coverage by using the measurement device. The measurement information may include the plurality of pieces of static target information. A speed of the static target information relative to a frame of reference on the ground is zero, and each piece of static target information corresponds to information about one static target.

Specifically, the measurement device may be a millimeter wave radar; and the preset angle coverage may include first preset angle coverage and second preset angle coverage. The first preset angle coverage is different from the second preset angle coverage. For example, the first preset angle coverage corresponds to 120 degrees, and the second preset angle coverage corresponds to 60 degrees. It may be understood that the first preset angle coverage and the second preset angle coverage may also be ranges of other degrees. This is not limited herein.

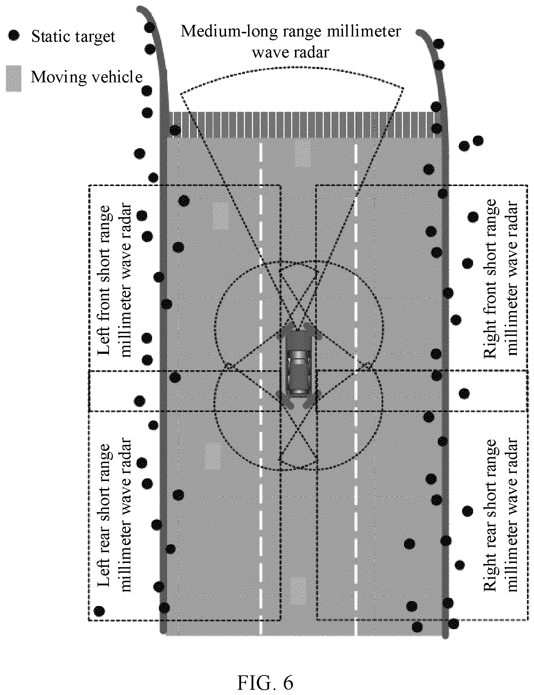

For ease of description, FIG. 6 is a schematic diagram of a scenario in which a millimeter wave radar obtains a target according to an embodiment of this application. As shown in FIG. 6, a beam coverage area of a short range millimeter wave radar is a small dashed-line sector area, and a beam coverage area of a medium-long range millimeter wave radar is a large dashed-line sector area, a dot represents a static target detected by a millimeter wave radar, and a box represents a moving target detected by the millimeter wave radar.

The vehicle positioning apparatus obtains tracking information of a plurality of static targets and/or moving targets in the first preset angle coverage by using a first millimeter wave radar, and obtains tracking information of a plurality of static targets and/or moving targets in the second preset angle coverage by using a second millimeter wave radar. A detection distance and a coverage field of view of the first millimeter wave radar are different from a detection distance and a coverage field of view of the second millimeter wave radar. If the first millimeter wave radar is a short range millimeter wave radar and the second millimeter wave radar is a medium-long range millimeter wave radar, the detection distance of the first millimeter wave radar is longer than the detection distance of the second millimeter wave radar, and a coverage area of the second millimeter wave radar is larger than a coverage area of the first millimeter wave radar, because a longer detection distance indicates a smaller coverage area (the coverage area is usually the coverage field of view). If the first millimeter wave radar is a medium-long range millimeter wave radar and the second millimeter wave radar is a short range millimeter wave radar, the detection distance of the first millimeter wave radar is shorter than the detection distance of the second millimeter wave radar, and a coverage area of the second millimeter wave radar is smaller than a coverage area of the first millimeter wave radar, because a shorter detection distance indicates a larger coverage area (the coverage area is usually the coverage field of view). A plurality of targets include static targets and/or moving targets. The static target may be a fixed object such as a roadside tree or a guardrail, and the moving target is usually a moving vehicle.

The vehicle positioning apparatus obtains tracking information of the plurality of targets. The tracking information includes location information and speed information of the targets in a radar coordinate system. There may be a specific quantity of false targets in the static targets detected by the millimeter wave radar, and false targets in two adjacent frames are not associated with each other. The millimeter wave radar detects a comparatively small quantity of moving targets. Target information in two adjacent frames is associated with each other, and each target corresponds to a unique sequence number.

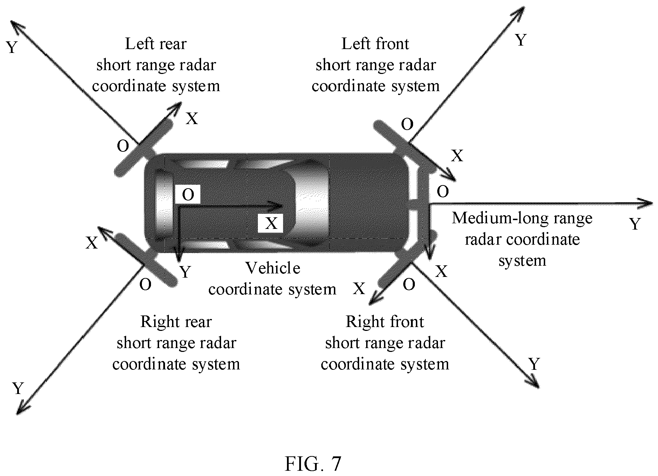

The vehicle positioning apparatus may calculate the measurement information within the preset angle coverage based on the tracking information and calibration parameters of the millimeter wave radars, where the tracking information belongs to information in the radar coordinate system, the measurement information within the preset angle coverage belongs to information in a vehicle coordinate system, and the calibration parameters include a rotation quantity and a translation quantity, the measurement information within the preset angle coverage includes location information and speed information of a target in the vehicle coordinate system. The following describes the vehicle coordinate system and the radar coordinate system. FIG. 7 is a schematic diagram of a millimeter wave radar coordinate system and a vehicle coordinate system according to an embodiment of this application. As shown in FIG. 7, in the radar coordinate system, a geometric center of a radar is used as an origin, a right direction of a sensor is used as an X axis, and a forward direction of the sensor is used as a Y axis. In the vehicle coordinate system, a center of a rear axle of a vehicle is used as an origin O, a driving direction of the vehicle is used as an X axis, and a right side direction of the rear axle is used as a Y axis.

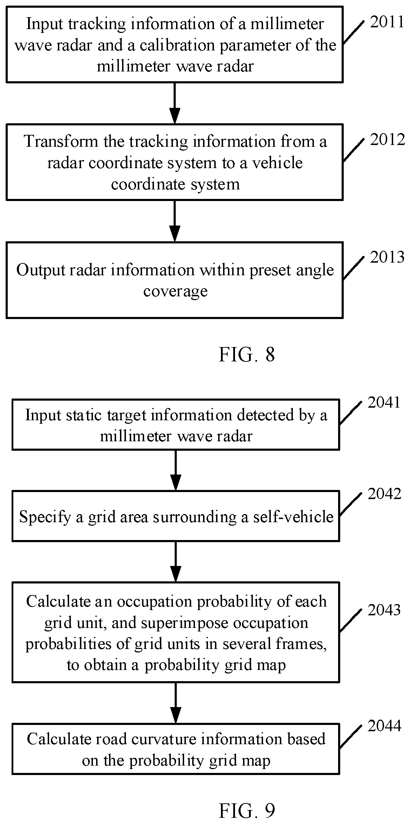

For ease of description, FIG. 8 is a schematic diagram of a procedure for obtaining measurement information within preset angle coverage according to an embodiment of this application. As shown in FIG. 8, details are as follows:

Step 2011: After obtaining the tracking information of the plurality of targets, the millimeter wave radars further needs to input the calibration parameters of the millimeter wave radars, where the calibration parameters include the rotation quantity R and the translation quantity $T$ that are transformed from the radar coordinate system to the vehicle coordinate system, and the tracking information of the targets includes location information $(x_r, y_r)$ and speed information $(V_{xr}, V_{yr})$.

Step 2012: Read a calibration parameter of each millimeter wave radar in the vehicle coordinate system, and transform the location information $(x_r, y_r)$ and the speed information $(V_{xr}, V_{yr})$ in step 2011 from the radar coordinate system to the vehicle coordinate system according to the following transform relationship, where in the vehicle coordinate system, the location information is represented as $(x_c, y_c)$, the speed information is represented as $(V_{xc}, V_{yc})$, and the transform relationship is expressed as:

$$(x_c, y_c) = R \times (x_r, y_r) + T ,$$

and

$$(V_{xc}, V_{yc}) = R \times (V_{xr}, V_{yr}),$$

where $(x_c, y_c)$ represents location information of a static target in the vehicle coordinate system, $x_c$ represents an x-coordinate of the static target in the vehicle coordinate system, $y_c$ represents a y-coordinate of the static target in the vehicle coordinate system, $(x_r, y_r)$ represents location information of the static target in the radar coordinate system, $x_r$ represents an x-coordinate of the static target in the radar coordinate system, $y_r$ represents a y-coordinate of the static target in the radar coordinate system, $R$ represents the rotation quantity, $T$ represents the translation quantity, $(V_{xc}, V_{yc})$ represents speed information of the static target in the vehicle coordinate system, $V_{xc}$ represents a speed of the static target in an x-direction in the vehicle coordinate system, $V_{yc}$ represents a speed of the static target in a y-direction in the vehicle coordinate system, $(V_{xr}, V_{yr})$ represents speed information of the static target in the radar coordinate system, $V_{xr}$ represents a speed of the static target in an x-direction in the radar coordinate system, and $V_{yr}$ represents a speed of the static target in a y-direction in the radar coordinate system.

For example, $(x_c, y_c) = (0.46, 3.90)$ and $(x_r, y_r) = (0.20, 1.80)$ are substituted into the foregoing relationship expression to obtain:

$$(x_c, y_c) = R \times (x_r, y_r) + T$$

$$\Rightarrow \begin{pmatrix} 0.46 \\ 3.90 \\ 0.00 \end{pmatrix} = \begin{pmatrix} 0.9979 & -0.0209 & 0.0610 \\ 0.0231 & 0.9991 & -0.0348 \\ -0.0603 & 0.0362 & 0.9975 \end{pmatrix} \times \begin{pmatrix} 0.20 \\ 1.80 \\ 0.00 \end{pmatrix} + \begin{pmatrix} 0.30 \\ 2.10 \\ -0.65 \end{pmatrix}$$

Step 2013: Output the measurement information within the preset angle coverage in the vehicle coordinate system.

202. Determine, based on the measurement information, current road boundary information corresponding to the current frame moment.

In this embodiment, the vehicle positioning apparatus determines, based on the measurement information in the vehicle coordinate system, the road boundary information corresponding to the current frame moment. The road boundary information is used to indicate a boundary of a drivable area on a road. The road boundary information may be expressed as a polynomial equation:

$$f_\theta(x_c) = \theta_0 + \theta_1 \times x_c + \theta_2 \times x_c^2 + \theta_3 \times x_c^3 ,$$

where

To solve a first coefficient $\theta_0$, a second coefficient $\theta_1$, a third coefficient $\theta_2$, and a fourth coefficient $\theta_3$ in the cubic polynomial equation, a cost function including a fitting mean square error and a regularization term of a polynomial parameter may be further constructed:

$$\forall (x_c, y_c), f_\theta : \min \left[ \sum (f_\theta(x_c) - y_c)^2 + \lambda \sum \theta_j^2 \right],$$

where

$f_\theta(x_c)$ represents the road boundary information, $\theta_0$ represents a first coefficient, $\theta_1$ represents a second coefficient, $\theta_2$ represents a third coefficient, $\theta_3$ represents a fourth coefficient, $x_c$ represents the x-coordinate of the static target in the vehicle coordinate system, $y_c$ represents the y-coordinate of the static target in the vehicle coordinate system, $(x_c,y_c)$ represents the location information of the static target in the vehicle coordinate system, $\lambda$ represents a regularization coefficient, $\theta_j$ represents a $j^{th}$ coefficient, and j is an integer greater than or equal to 0 and less than or equal to 3.

For example, it is assumed that $\lambda = 0.1$, and $\theta_0$, $\theta_1$, $\theta_2$, and $\theta_3$ may be calculated by using a minimum value. For example, the following expression is obtained:

$$f_\theta\left(x_c\right) = 0.39 + 2.62 x_c + 0.23 x_c^2 + 0.05 x_c^3$$

203. Determine first target positioning information based on the current road boundary information, where the first target positioning information is used to indicate a location of a target vehicle on a road.

In this embodiment, the vehicle positioning apparatus may determine the first target positioning information based on the road boundary information corresponding to the current frame moment. The first target positioning information herein is determined based on the static target information, and the first target positioning information is used to indicate a location of the vehicle in a lane, for example, the vehicle is in a second lane in five lanes.

Specifically, a process in which the vehicle positioning apparatus determines the first target positioning information is as follows: First, the vehicle positioning apparatus calculates stability augmented boundary information at the current frame moment based on the road boundary information corresponding to the current frame moment and historical road boundary information, where the stability augmented boundary information is obtained by performing weighted averaging on the previous historical road boundary information and the current road boundary information, so as to improve stability of a current positioning result. Then, the vehicle positioning apparatus obtains a first distance from the vehicle to a left road boundary and a second distance from the vehicle to a right road boundary based on the stability augmented boundary information at the current frame moment. Finally, the vehicle positioning apparatus calculates the first target positioning information at the current frame moment based on the first distance and the second distance.

The stability augmented boundary information corresponding to the current frame moment may be calculated in the following manner:

$$f_\theta' = \sum \frac{\left| f_{\theta\_w}(x_c) - \mu \right|}{\sum \left| f_{\theta\_w}(x_c) - \mu \right|} f_{\theta\_w}(x_c), w \in [1, W],$$

where

$f_\theta'$ represents the stability augmented boundary information corresponding to the current frame moment, $f_{\theta\_w}(x_c)$ represents historical road boundary information corresponding to a $W^{th}$ frame, W represents a quantity of pieces of the historical road boundary information, $x_c$ represents the x-coordinate of the static target in the vehicle coordinate system, and $\mu$ represents an average value of historical road boundary information in the W frames.

For example, it is assumed that there are road boundaries calculated in a total of five frames, and all values of

$$\frac{\left| f_{\theta\_w}(x_c) - \mu \right|}{\sum \left| f_{\theta\_w}(x_c) - \mu \right|}$$ may approximate to 0.2, for example, 0.21, 0.19, 0.23, 0.20, and 0.22. Then, the following stability augmented boundary information is obtained through update:

$$f_\theta' = \sum \frac{\left| f_{\theta\_w}(x_c) - \mu \right|}{\sum \left| f_{\theta\_w}(x_c) - \mu \right|} f_{\theta\_w}(x_c)$$

$$\Rightarrow 0.21 \times f_{\theta 1}\left(x_c\right) + 0.19 \times f_{\theta 2}\left(x_c\right) + 0.23 \times f_{\theta 3}\left(x_c\right) + 0.20 \times f_{\theta 4}\left(x_c\right) + 0.22 \times f_{\theta 5}\left(x_c\right)$$

The first distance $R_L$ from the self-vehicle to the left road boundary and the second distance $R_R$ from the self-vehicle to the right road boundary may be obtained based on the stability augmented boundary information calculated in the foregoing step, and a lane width D may be calculated based on a quantity N of lanes in the lane quantity map. A quantity *ceil*($R_L$-*D*) (rounding up) of lanes from the self-vehicle to the left road boundary and a quantity *ceil*($R_R$-*D*) (rounding up) of lanes from the self-vehicle to the right road boundary are calculated, and the first target positioning information is determined based on the quantity of lanes from the self-vehicle to the left road boundary and the quantity of lanes from the self-vehicle to the right road boundary, in other words, the lane in which the self-vehicle is located is determined.

The first target positioning information at the current frame moment is calculated in the following manner:

$$Location = \left(ceil\left(R_R - D\right), ceil\left(R_L - D\right)\right),$$

and

$$D = \left(R_L + R_R\right) / N,$$

where

*Location* represents the first target positioning information at the current frame moment, *ceil* represents a rounding-up calculation manner, $R_L$ represents the first distance from the vehicle to the left road boundary, $R_R$ represents the second distance from the vehicle to the right road boundary, *D* represents the lane width, and *N* represents the quantity of lanes.

204. Determine road curvature information based on the current road boundary information and historical road boundary information, where the road curvature information is used to indicate a bending degree of the road on which the target vehicle is located, the historical road boundary information includes road boundary information corresponding to at least one historical frame moment, and the historical frame moment is a moment that is before the current frame moment and at which the road boundary information and road curvature information are obtained.

In this embodiment, the vehicle positioning apparatus may determine the road curvature information based on the road boundary information and the historical road boundary information. The road curvature information is used to indicate the bending degree of the road on which the vehicle is located, and a reciprocal of the road curvature information corresponds to a bending radius.

Optionally, before determining the road curvature information, the vehicle positioning apparatus further needs to construct a probability grid map, and visually determines fused boundary information based on the probability grid map. A plurality of pieces of stability augmented boundary information are used to generate the probability grid map, to obtain the fused boundary information. For ease of description, FIG. 9 is a schematic diagram of a procedure for constructing a probability grid map according to an embodiment of this application. As shown in FIG. 9, details are as follows:

Step 2041: Input static target information, detected by the millimeter wave radars, surrounding the self-vehicle. Considering that data of the millimeter wave radars is refreshed in an extremely short time (generally 50 milliseconds), stability augmented boundary information continuously changes within the time in which the data of the millimeter wave radars is refreshed. In other words, for several consecutive frames of data, positioning of a static target by the millimeter wave radars does not change greatly. After positioning the static target succeeds, the road boundary information at the current frame moment is recorded. In a subsequent process of calculating the fused boundary information, weighted averaging is performed on the road boundary information at the current frame moment and the historical road boundary information, to obtain the stability augmented boundary information at the current frame moment, so as to improve calculation stability of the fused boundary information. The plurality pieces of stability augmented boundary information may be used to obtain the fused boundary information.

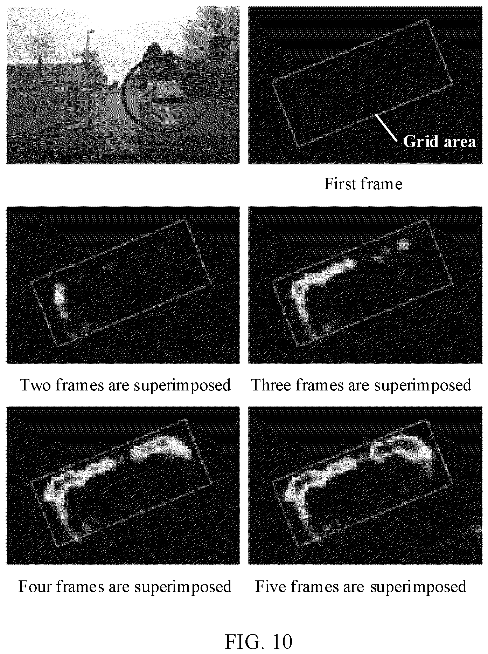

Step 2042: A grid area surrounding the self-vehicle (that is, the target vehicle) needs to be specified, that is, a grid area is set surrounding the self-vehicle. FIG. 10 is a schematic diagram of a probability grid map according to an embodiment of this application. As shown in FIG. 10, one grid area is specified for each of the first frame moment to the fifth frame moment. For example, a grid area with left and right boundaries ±20 m based on left and right boundaries of the vehicle and front and rear boundaries ±70 m based on front and boundaries of the vehicle is obtained according to test experience, and each grid unit has a size of 0.2 meter. In this case, a grid area with a size m × n (m is obtained by dividing a width of the grid area by a size of a grid unit, and n is obtained by dividing a length of the grid area by the size of the grid unit) surrounding the self-vehicle can be obtained. In addition, in a process in which the self-vehicle moves forward, the grid area is always an area keeping a constant distance to the left, right, front, and rear boundaries of the self-vehicle (for example, the grid area with the left and right boundaries ±20 m based on the left and right boundaries of the vehicle and the front and rear boundaries ±70 m based on the front and boundaries of the vehicle is obtained according to test experience).

Step 2043: Assuming that probability distribution of the static target information detected by the millimeter wave radars is Gaussian distribution, for each grid unit, fuse static target information in a plurality of frames (for example, 20 frames are selected according to test experience) to obtain $(x_c, y_c)$, where an average value of the static target information in the plurality of frames is $(x_c, y_c)'$ based on location relationships between the millimeter wave radars and the static target information, continuously accumulate a probability of each grid unit occupied by a target, and superimpose occupation probabilities of grid units in several frames, to obtain a probability grid map, that is, the probability grid map shown in FIG. 10.

The occupation probability of each grid unit may be calculated in the following manner:

$$p_n(x_c, y_c) = \min(p(x_c, y_c) + p_{n-1}(x_c, y_c), 1),$$

and

$$p(x_c, y_c) = \frac{1}{\sqrt{2|S|}} \exp(-\frac{1}{2}((x_c, y_c) - (x_c, y_c)')^T S^{-1}((x_c, y_c) - (x_c, y_c)')),$$

where
$p_n(x_c, y_c)$ represents an occupation probability of a grid unit in an $n^{th}$ frame, $p(x_c, y_c)$ represents the road boundary information, $p_{n-1}(x_c, y_c)$ represents historical road boundary information in an $(n-1)^{th}$ frame, $x_c$ represents the x-coordinate of the static target in the vehicle coordinate system, $y_c$ represents the y-coordinate of the static target in the vehicle coordinate system, $(x_c, y_c)$ represents the location information of the static target in the vehicle coordinate system, $(x_c, y_c)'$ represents an average value of location information of the static target in the vehicle coordinate system in a plurality of frames, and S represents a covariance between $x_c$ and $y_c$.

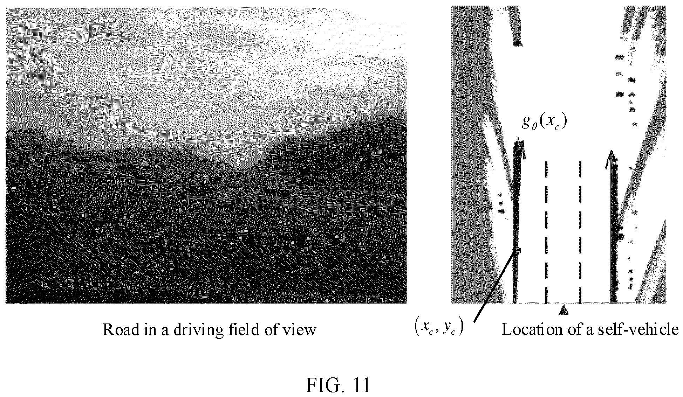

After the calculation, a result of constructing the probability grid map for the area surrounding the self-vehicle may be obtained. Specifically, FIG. 11 is a schematic diagram of a result of constructing a probability grid map according to an embodiment of this application. As shown in FIG. 11, darker black indicates a higher occupation probability. An occupation probability of the fused boundary information usually approaches 1.

For example, it is assumed that $(x_c, y_c)=(0.51, 3.51)$, $(x_c, y_c)'=(0.50, 3.50)$, and $S=[0.9, 0.1; 0.1, 0.9]$, which are substituted into the foregoing formula, and the following result is obtained:

$$\begin{aligned}
p(x_c, y_c) &= \frac{1}{\sqrt{2|S|}} \exp(-\frac{1}{2}((x_c, y_c) - (x_c, y_c)')^T S^{-1}((x_c, y_c) - (x_c, y_c)')) \\
\Rightarrow\ & p(0.51, 3.51) \\
&= \frac{1}{\sqrt{2|0.8|}} * exp(-0.5*((0.51, 3.51) - (0.50, 3.50)) * inv([0.9, 0.1; 0.1, 0.9]) * ((0.51, 3.51) - (0.50, 3.50))) \\
&= 0.45
\end{aligned}$$

where
inv represents matrix inversion, and exp represents an exponential operation.

Step 2044: Finally, the road curvature information may be calculated based on the probability grid map, and the road curvature information may be calculated in the following manner:

$$Q = \frac{|g_\theta''(x_c)|}{(1 + (g_\theta'(x_c))^2)^{3/2}},$$

where
Q represents the road curvature information, $g_\theta(x_c)$ represents the fused boundary information, $g_\theta'(x_c)$ represents a first-order derivative of $g_\theta(x_c)$, and $g_\theta''(x_c)$ represents a second-order derivative of $g_\theta(x_c)$.

For example, assuming that $g_\theta'(x_c) = 0.5$ and $g_\theta''(x_c) = 0.05$, the following is obtained:

$$Q = \frac{\left| g_\theta^{"}(x_c) \right|}{(1 + (g_\theta^{'}(x_c))^2)^{3/2}}$$

$$\Rightarrow \frac{\left| 0.05 \right|}{(1 + (0.5))^2)^{3/2}} = 0.03$$

That is, the road curvature information is equal to 0.03.

205. Output the first target positioning information and the road curvature information.

In this embodiment, the vehicle positioning apparatus outputs the first target positioning information and the road curvature information in a display manner and/or a voice manner, to remind a commissioning person. In this way, driving is assisted.

In the embodiments of this application, the vehicle positioning method is provided. First, the vehicle positioning apparatus obtains the measurement information within the preset angle coverage by using the millimeter wave radars, where the measurement information includes the plurality of pieces of static target information; then, the vehicle positioning apparatus determines, based on the measurement information, the road boundary information corresponding to the current frame moment, and the vehicle positioning apparatus determines the first target positioning information based on the road boundary information corresponding to the current frame moment, where the first target positioning information is used to indicate the location of the vehicle in the lane; finally, the vehicle positioning apparatus determines the road curvature information based on the road boundary information and the historical road boundary information, where the road curvature information is used to indicate the bending degree of the road on which the vehicle is located, the historical road boundary information includes the road boundary information corresponding to the at least one historical frame moment, and the historical frame moment is the moment that is before the current frame moment and at which the road boundary information and the road curvature information are obtained. In the foregoing manner, because the millimeter wave radar performs active measurement, the millimeter wave radar suffers little impact from light and climate within a visible range of the millimeter wave radar. In a central city area, a tunnel, or a culvert or in a non-ideal meteorological condition, the millimeter wave radar can be used to obtain location relationships between the vehicle and surrounding targets, to determine positioning information of the vehicle on the road. Therefore, a confidence level and reliability of the positioning information is improved. In addition, the road curvature information is determined based on these location relationships, and a bending degree of the lane in which the vehicle is located can be estimated based on the road curvature information. Therefore, vehicle positioning accuracy is improved. Vehicle planning and control are better assisted in lane-level positioning in advanced assisted driving or automatic driving.

Optionally, based on the embodiment corresponding to FIG. 5, in a first optional embodiment of the vehicle positioning method provided in this embodiment of this application, before the determining, based on the measurement information, current road boundary information corresponding to the current frame moment, the method may further include:

obtaining candidate static target information and M pieces of reference static target information from the measurement information, where M is an integer greater than 1;
calculating an average distance between the M pieces of reference static target information and the candidate static target information; and
removing the candidate static target information from the measurement information if the average distance does not meet a preset static target condition; where
the candidate static target information is any one of the plurality of pieces of static target information, and the reference static target information is static target information with a distance to the candidate static target information less than a preset distance, in the plurality of pieces of static target information.

In this embodiment, after obtaining the measurement information within the preset angle coverage by the millimeter wave radars, the vehicle positioning apparatus further needs to obtain, through screening, static target information that meets the requirement, and remove static target information that does not meet the requirement.

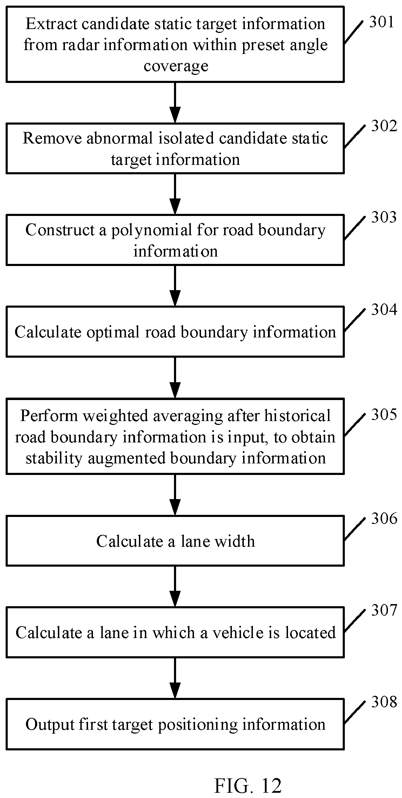

For ease of description, FIG. 12 is a schematic diagram of a procedure in which a millimeter wave radar positions static target information according to an embodiment of this application. As shown in FIG. 12, details are as follows:

Step 301: First extract candidate static target information from measurement information within preset angle coverage, and compare a running speed $V_{car}$ of a vehicle with a speed $V_{xc}$ in a vehicle coordinate system, where if an error $|V_{car}-V_{xc}|$ between the speed in the vehicle coordinate system and the running speed of the vehicle falls within a specific range (for example, 2 meter/second), a target may be identified as candidate static target information.

Step 302: Remove abnormal isolated candidate static target information. M pieces of closest reference static target information $P_i(i=1,...,M)$ may be found for the candidate static target information $P$, and an average distance between P and $P_i$ may be calculated. To be specific, the average distance may be calculated in the following manner:

$$d = \frac{1}{M}\sum_{i=1}^{M}\sqrt{(P-P_i)^2} \ ,$$

where
d represents the average distance, M represents a quantity of pieces of the reference static information, P represents location information of the candidate static target information, $P_i$ represents location information of an $i$ th piece of reference static information, and $i$ is an integer greater than 0 and less than or equal to M.

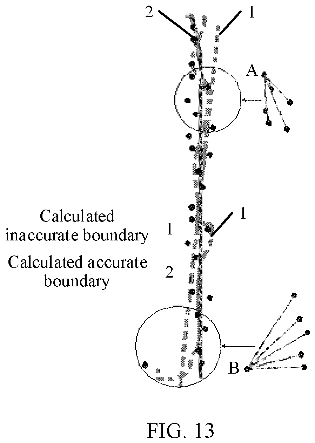

If the average distance $d$ between $P$ and $P_i$ is greater than a threshold (the threshold may be set through commissioning based on an actual parameter of a radar system, and is usually about five times of a distance resolution of the radar), it is determined that P is an abnormal isolated target. FIG. 13 is a schematic diagram of determining abnormal candidate static target information according to an embodiment of this application. As shown by a point A and a point B in FIG. 13, distances between five pieces of closest reference static information surrounding the point A and the point A are all comparatively short, and therefore an average distance is comparatively short; distances between five pieces of closest reference static information surrounding the point B and the point B are all comparatively long, and therefore an average distance is comparatively long. After the average distances are compared with the preset threshold, the point A is not identified as an abnormal isolated target, the point B is identified as an abnormal isolated target, and the point B needs to be removed.

FIG. 13 corresponds to the left road boundary in FIG. 6. A dot represents static target information detected by a radar, a straight line 2 is a calculated accurate road boundary, a straight line 1 or a curve 1 is a calculated inaccurate road boundary, and a curve 2 is stability augmented boundary information. It may be understood that the point A and the point B are two example targets, and should not be construed as a limitation on this application.

Step 303: After removing the abnormal isolated target, a vehicle positioning apparatus may construct a polynomial for road boundary information, that is, calculate the road boundary information based on remaining static target information. For a specific manner, refer to related content described in step 202 in the embodiment corresponding to FIG. 5. Details are not described herein again.

Step 304: Substitute location information of the removed abnormal isolated static target into a road boundary cost function in step 303, to calculate an optimal road boundary polynomial coefficient, and determine optimal road boundary information.

Step 305: After historical road boundary information is input, perform weighted averaging to obtain stability augmented boundary information, and then determine fused boundary information based on a plurality of pieces of stability augmented boundary information. For a specific manner, refer to related content described in step 203 in the embodiment corresponding to FIG. 5. Details are not described herein again.

Weighted averaging is performed based on a historical road boundary. This can effectively improve stability of the road boundary information, and avoid an unstable road boundary. If the stability augmented boundary information is calculated based on an initial frame, weighted averaging is not performed on the road boundary information. Weighted averaging usually starts after five frames are obtained, and is usually performed on 5 to 10 frames.

Step 306: A distance from the self-vehicle to a left road boundary and a distance from the self-vehicle to a right road boundary may be obtained based on the stability augmented boundary information calculated in step 305, and a lane width is calculated based on a quantity of lanes in a lane quantity map.

Step 307: The vehicle positioning apparatus calculates a quantity of lanes from the self-vehicle to the left road boundary and a quantity of lanes from the self-vehicle to the right road boundary based on the distance from the self-vehicle to the left road boundary, the distance from the self-vehicle to the right road boundary, and the calculated lane width, and determines, based on the quantity of lanes from the self-vehicle to the left road boundary and the quantity of lanes from the self-vehicle to the right road boundary, a lane in which the self-vehicle is located.

Step 308: The vehicle positioning apparatus outputs first target positioning information, that is, marks, on the lane quantity map, the lane in which the self-vehicle is located.

Then, in this embodiment of this application, how to remove the abnormal candidate static target information from the measurement information within the preset angle coverage is described. A feasible manner is: obtaining the average distance based on the candidate static target information and the M pieces of reference static target information, and if the average distance is greater than the threshold, performing a step of removing the candidate static target information from the measurement information within the preset angle coverage. In the foregoing manner, some abnormal points may be removed, so that road boundary information calculation accuracy is improved, a result is closer to an actual situation, and feasibility of the solution is improved.

Embodiment 2: Vehicle positioning is completed based on a plurality of pieces of static target information and a plurality of pieces of moving target information.

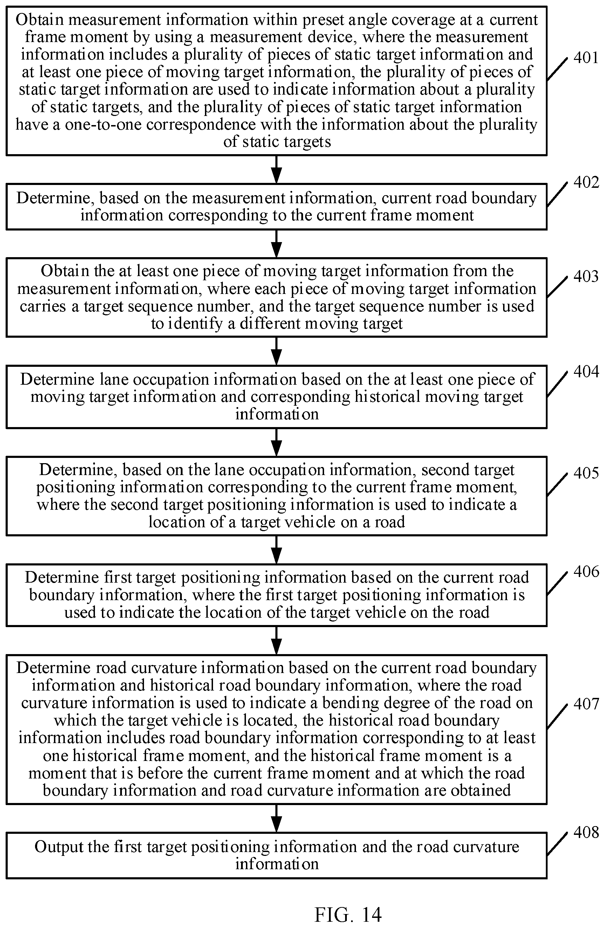

FIG. 14 is a schematic diagram of another embodiment of a vehicle positioning method according to an embodiment of this application. As shown in FIG. 14, the another embodiment of the vehicle positioning method in this embodiment of this application includes the following steps.

401. Obtain measurement information within preset angle coverage at a current frame moment by using a measurement device, where the measurement information includes a plurality of pieces of static target information and at least one piece of moving target information, the plurality of pieces of static target information are used to indicate information about a plurality of static targets, and the plurality of pieces of static target information have a one-to-one correspondence with the information about the plurality of static targets.

In this embodiment, for a process of obtaining the plurality of pieces of static target information within the preset angle coverage by millimeter wave radars, refer to step 201 in the embodiment corresponding to FIG. 5. Details are not described herein again.

The following describes how to determine the at least one piece of moving target information.

The moving target information is target information with a displacement relative to the ground. First, candidate moving target information is extracted from the measurement information within the preset angle coverage, and a running speed $V_{car}$ of a vehicle is compared with a speed $V_{xc}$ in a vehicle coordinate system. If an error $|V_{car} - V_{xc}|$ between the speed in the vehicle coordinate system and the running speed of the vehicle exceeds a specific range (for example, 2 meter/second), a target may be identified as moving target information.

It may be understood that the moving target information includes but is not limited to a sequence number of a target, location information of the target, and speed information of the target.

402. Determine, based on the measurement information, current road boundary information corresponding to the current frame moment.

In this embodiment, for a process in which a vehicle positioning apparatus determines, based on the measurement information, the road boundary information corresponding to the current frame moment, refer to step 202 in the embodiment corresponding to FIG. 5. Details are not described herein again.

403. Obtain the at least one piece of moving target information from the measurement information, where each piece of moving target information carries a target sequence number, and the target sequence number is used to identify a different moving target.

In this embodiment, the vehicle positioning apparatus obtains, from the measurement information, the at least one piece of moving target information at the current frame moment. Each piece of moving target information carries a corresponding target sequence number, and different target sequence numbers are used to identify different targets.

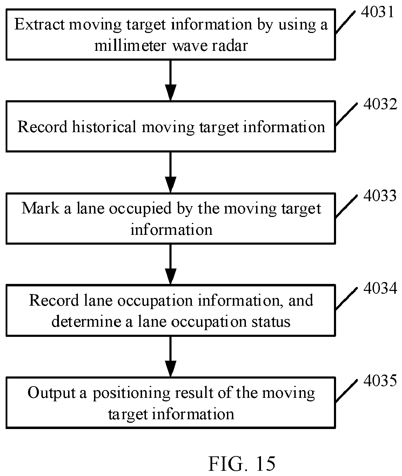

When the vehicle runs in a scenario in which a vehicle flow is comparatively heavy, the millimeter wave radars installed on the vehicle are blocked by vehicles to some extent. Consequently, obtained static target information is decreased, and the decrease in the static target information affects extraction of the road boundary information. In this case, because the vehicle runs in a lane on a road, information about the lane in which the self-vehicle is located can be determined based on the moving target information and historical moving target information in a past time period (for example, M frames in the past, where M is usually 5 according to actual test experience), a lane quantity map, and a lane occupation status. A specific procedure is shown in FIG. 15. FIG. 15 is a schematic diagram of a procedure in which a millimeter wave radar positions moving target information according to an embodiment of this application. As shown in FIG. 15, details are as follows:

Step 4031: Input moving target information, and determine to compare a running speed $V_{car}$ of the vehicle with a speed $V_{xc}$ of the moving target information in the vehicle coordinate system, where if an error $|V_{car} - V_{xc}|$ between the speed in the vehicle coordinate system and the running speed of the vehicle exceeds a specific range (for example, 2 meter/second), a target may be identified as moving target information.

Step 4032: Record historical tracking of the moving target information based on a sequence number of the moving target information (the sequence number remains unchanged from start of tracking by a radar to an end of the tracking).

Step 4033: Mark a lane occupied by the moving target information. A specific marking manner is to be described in step 405, and is merely a brief description herein.

Step 4034: Record lane occupation information, and determine a lane occupation status. To be specific, occupation statuses of all lanes may be determined based on the lane occupation information and a marking result, which lanes are occupied may be determined based on the lane quantity map, and the occupied lanes are marked on the map.

Step 4035: Based on information that is about occupation by a moving vehicle and that is marked on the lane quantity map, a remaining unmarked lane is the lane in which the self-vehicle is located, local self-vehicle positioning is further completed, and a self-vehicle positioning result is output.

404. Determine the lane occupation information based on the at least one piece of moving target information and corresponding historical moving target information.

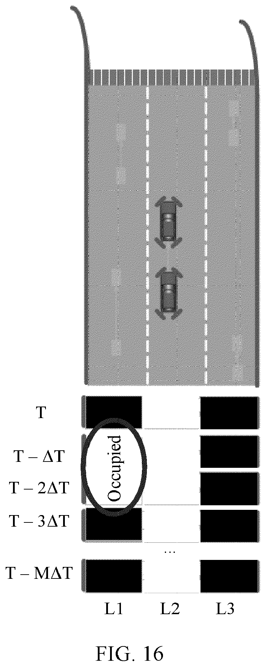

In this embodiment, the vehicle positioning apparatus may determine, based on location information (especially y-direction location information) corresponding to each piece of moving target information obtained by the millimeter wave radars, prior information of a lane width (the lane width is usually 3.5 meters to 3.75 meters), and a y-direction distance of other moving target information than moving target information located in a same lane as the self-vehicle (a y-direction distance to the self-vehicle is less than a half of the lane), a lane $L_k$ in which a moving target is located. For each piece of moving target information, in terms of a current frame and previous historical frames, that is, a total of $K$ frames, if moving targets occupy the lane $L_k$ in $k$ frames of the K frames, it may be determined that the lane is occupied. For ease of understanding, FIG. 16 is a schematic diagram of a lane occupied by moving target information according to an embodiment of this application. As shown in FIG. 16, it is assumed that there are a total of three lanes: L1, L2, and L3. In a frame T, the lane L1 is idle, the lane L2 is occupied, and the lane L3 is idle. In a frame (T - □T), the lane L1 is occupied, the lane L2 is occupied, and the lane L3 is idle. In a frame (T - 2□T), the lane L1 is occupied, the lane L2 is occupied, and the lane L3 is idle. In a frame (T - 3 □T), the lane L1 is idle, the lane L2 is occupied, and the lane L3 is idle. An occupation status of the lane $L_k$ may be determined according to the following formula:

$$L_k = \begin{cases} \text{Occupied}, & \dfrac{k}{K} \geq thres \\ \text{Idle}, & \dfrac{k}{K} < thres \end{cases},$$

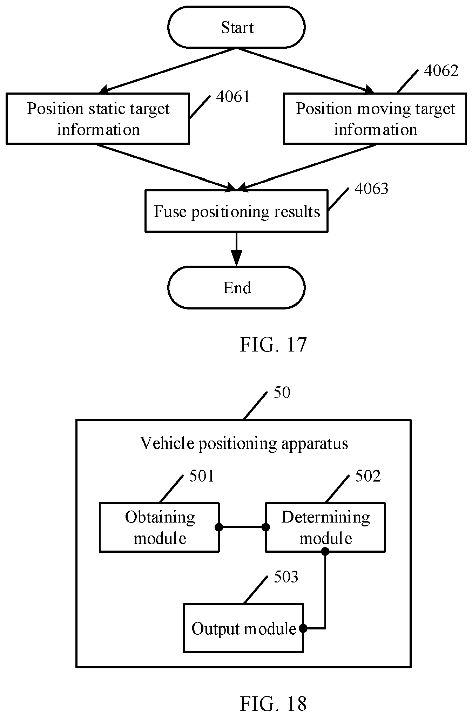

where
$L_k$ represents the lane $L_k$, $k$ represents $k$ frames in which the lane is occupied, $k$ is an integer greater than 0 and less than or equal to $K$, $K$ represents a total of $K$ frame moments, and thres represents a preset ratio.
405. Determine, based on the lane occupation information, second target positioning information corresponding to the current frame moment, where the second target positioning information is used to indicate a location of a target vehicle on a road.
In this embodiment, it can be learned based on the content described in step 404 that, if a lane occupation ratio is greater than or equal to the preset ratio, it is determined that the lane $L_k$ is unoccupied, and the unoccupied lane $L_k$ is determined as the second target positioning information corresponding to the current frame moment. The second target positioning information is used to indicate the location of the vehicle in the lane, for example, a second lane in three lanes.
406. Determine first target positioning information based on the current road boundary information, where the first target positioning information is used to indicate the location of the target vehicle on the road.
In this embodiment, the vehicle positioning apparatus may determine a confidence level of the first target positioning information based on the second target positioning information, where the confidence level is used to indicate a trusted degree of the first target positioning information, and a higher confidence level usually indicates higher reliability of a result, and finally determine the first target positioning information at the current moment based on the confidence level.
For ease of understanding, an entire fusion positioning process is shown in FIG. 17. FIG. 17 is a schematic diagram of fusing static target information and moving target information by a millimeter wave radar according to an embodiment of this application. As shown in FIG. 17, positioning results (that is, the first target positioning information) of the plurality of pieces of static target information obtained by the millimeter wave radars in step 4061 and the plurality of pieces of moving target information (that is, the second target positioning information) obtained by the millimeter wave radars in step 4062 are integrated on the road quantity map, distances from the self-vehicle to both boundaries of the lane and an occupation status of the lane in which the tracked moving target is located are integrated, and information about the lane in which the self-vehicle is located is integrated and determined.
407. Determine road curvature information based on the current road boundary information and historical road boundary information, where the road curvature information is used to indicate a bending degree of the road on which the target vehicle is located, the historical road boundary information includes road boundary information corresponding to at least one historical frame moment, and the historical frame moment is a moment that is before the current frame moment and at which the road boundary information and road curvature information are obtained.
In this embodiment, for a process in which the vehicle positioning apparatus determines the road curvature information based on the road boundary information and the historical road boundary information, refer to step 204 in the embodiment corresponding to FIG. 5. Details are not described herein again.

408. Output the first target positioning information and the road curvature information.

In this embodiment, the vehicle positioning apparatus outputs the first target positioning information and the road curvature information in a display manner and/or a voice manner, to remind a commissioning person. In this way, driving is assisted.

In this embodiment of this application, the millimeter wave radars simultaneously obtain the plurality of pieces of static target information and the moving target information, and calculate the road boundary information based on the static target information and the moving target information, to implement vehicle positioning. The moving target information may be used to assist the static target information, to calculate the road boundary information, so that accurate vehicle positioning can be completed when a vehicle flow is comparatively heavy. Therefore, feasibility and flexibility of the solution are improved, and a positioning confidence level is improved.

The following describes in detail a vehicle positioning apparatus corresponding to an embodiment in this application. Referring to FIG. 18, a vehicle positioning apparatus 50 in this embodiment of this application includes:

an obtaining module 501, configured to obtain measurement information within preset angle coverage at a current frame moment by using a measurement device, where the measurement information includes a plurality of pieces of static target information, the plurality of pieces of static target information are used to indicate information about a plurality of static targets, and the plurality of pieces of static target information have a one-to-one correspondence with the information about the plurality of static targets;

a determining module 502, configured to determine, based on the measurement information obtained by the obtaining module 501, current road boundary information corresponding to the current frame moment; where the determining module 502 is configured to determine first target positioning information based on the current road boundary information, where the first target positioning information is used to indicate a location of a target vehicle on a road; and

the determining module 502 is configured to determine road curvature information based on the current road boundary information and historical road boundary information, where the road curvature information is used to indicate a bending degree of the road on which the target vehicle is located, the historical road boundary information includes road boundary information corresponding to at least one historical frame moment, and the historical frame moment is a moment that is before the current frame moment and at which the road boundary information and road curvature information are obtained; and

an output module 503, configured to output the first target positioning information determined by the determining module 502 and the road curvature information determined by the determining module.

In this embodiment, at the current frame moment, the obtaining module 501 obtains the measurement information within the preset angle coverage by using the measurement device, where the measurement information includes the plurality of pieces of static target information, and the plurality of pieces of static target information are used to indicate the information about the plurality of static targets, the plurality of pieces of static target information have a one-to-one correspondence with the information about the plurality of static targets; the determining module 502 determines, based on the measurement information obtained by the obtaining module 501, the current road boundary information corresponding to the current frame moment; the determining module 502 determines the first target positioning information based on the current road boundary information, where the first target positioning information is used to indicate the location of the target vehicle on the road; the determining module 502 determines the road curvature information based on the current road boundary information and the historical road boundary information, where the road curvature information is used to indicate the bending degree of the road on which the target vehicle is located, the historical road boundary information includes the road boundary information corresponding to the at least one historical frame moment, and the historical frame moment is the moment that is before the current frame moment and at which the road boundary information and the road curvature information are obtained; and the output module 503 outputs the first target positioning information determined by the determining module 502 and the road curvature information determined by the determining module.

In this embodiment of this application, the vehicle positioning apparatus is provided. First, the vehicle positioning apparatus obtains the measurement information within the preset angle coverage by using millimeter wave radars, where the measurement information includes the plurality of pieces of static target information; then, the vehicle positioning apparatus determines, based on the measurement information, the road boundary information corresponding to the current frame moment, and the vehicle positioning apparatus determines the first target positioning information based on the road boundary information corresponding to the current frame moment, where the first target positioning information is used to indicate the location of the vehicle in a lane; finally, the vehicle positioning apparatus determines the road curvature information based on the road boundary information and the historical road boundary information, where the road curvature information is used to indicate the bending degree of the road on which the vehicle is located, the historical road boundary information includes the road boundary information corresponding to the at least one historical frame moment, and the historical frame moment is the moment that is before the current frame moment and at which the road boundary information and the road curvature information are obtained. In the foregoing manner, because the millimeter wave radar performs active measurement, the millimeter wave radar suffers little impact from light and climate within a visible range of the millimeter wave radar. In a central city area, a tunnel, or a culvert or in a non-ideal meteorological condition, the millimeter wave radar can be used to obtain location relationships between the vehicle and surrounding targets, to determine positioning information of the vehicle on the road. Therefore, a confidence level and reliability of the positioning information is improved. In addition, the road curvature information is determined based on these location relationships, and a bending degree of the lane in which the vehicle is located can be estimated based on the road curvature information. Therefore, vehicle positioning accuracy is improved. Vehicle planning and control are better assisted in lane-level positioning in advanced assisted driving or automatic driving.

Optionally, based on the embodiment corresponding to FIG. 18, in another embodiment of the vehicle positioning apparatus 50 provided in this embodiment of this application,

the obtaining module 501 is specifically configured to: obtain tracking information of the plurality of static targets within the preset angle coverage by using millimeter wave radars, where the tracking information includes location information and speed information of the plurality of static targets in a radar coordinate system; and
calculate the measurement information based on the tracking information and calibration parameters of the millimeter wave radars, where the measurement information includes location information and speed information of the plurality of static targets in a vehicle coordinate system, and the calibration parameters include a rotation quantity and a translation quantity.

It can be learned that a medium-long range millimeter wave radar and a short range millimeter wave radar are used to obtain the static target information and moving target information surrounding the vehicle. The millimeter wave radar has an extremely wide frequency band, is applicable to all types of broadband signal processing, further has angle identification and tracking capabilities, and has a comparatively wide Doppler bandwidth, a significant Doppler effect, and a high Doppler resolution. The millimeter wave radar has a short wavelength, accurately and finely illustrates a scattering characteristic of a target, and has comparatively high speed measurement precision.

Optionally, based on the embodiment corresponding to FIG. 18, in another embodiment of the vehicle positioning apparatus 50 provided in this embodiment of this application, the preset angle coverage includes first preset angle coverage and second preset angle coverage;

the obtaining module 501 is specifically configured to: obtain first tracking information of a plurality of first static targets within the first preset angle coverage by using a first millimeter wave radar, and obtain second tracking information of a plurality of second static targets within the second preset angle coverage by using a second millimeter wave radar, where the tracking information includes the first tracking information and the second tracking information, the plurality of static targets include the plurality of first static targets and the plurality of second static targets, the millimeter wave radars include the first millimeter wave radar and the second millimeter wave radar, and a detection distance and a coverage field of view of the first millimeter wave radar are different from a detection distance and a coverage field of view of the second millimeter wave radar; and
calculate first measurement information within the first preset angle coverage based on the first tracking information and a calibration parameter of the millimeter wave radar, and calculate second measurement information within the second preset angle coverage based on the second tracking information and a calibration parameter of the millimeter wave radar, where the measurement information includes the first measurement information and the second measurement information.

It can be learned that in this embodiment of this application, it is proposed that the first millimeter wave radar and the second millimeter wave radar may be used to obtain different measurement information. This information obtaining manner does not require real-time kinematic positioning with high costs, images with a large data volume, and point cloud information, but mainly depends on information from the millimeter wave radars. For example, there are five millimeter wave radars, and each radar outputs a maximum of 32 targets. A data volume is only hundreds of kilobytes (kilobyte, KB) per second, and is far less than a data volume of a visual image and a data volume of a laser point cloud.

Optionally, based on the embodiment corresponding to FIG. 18, in another embodiment of the vehicle positioning apparatus 50 provided in this embodiment of this application, the obtaining module 501 is specifically configured to calculate the measurement information in the following manner:

$$\left(x_c, y_c\right) = R \times \left(x_r, y_r\right) + T ,$$

and

$$\left(V_{xc}, V_{yc}\right) = R \times \left(V_{xr}, V_{yr}\right),$$

where $(x_c, y_c)$ represents location information of a static target in the vehicle coordinate system, $x_c$ represents an x-coordinate of the static target in the vehicle coordinate system, $y_c$ represents a y-coordinate of the static target in the vehicle coordinate system, $(x_r, y_r)$ represents location information of the static target in the radar coordinate system, $x_r$ represents an x-coordinate of the static target in the radar coordinate system, $y_r$ represents a y-coordinate of the static target in the radar coordinate system, R represents the rotation quantity, $T$ represents the translation quantity, $(V_{xc}, V_{yc})$ represents speed information of the static target in the vehicle coordinate system, $V_{xc}$ represents a speed of the static target in an x-direction in the vehicle coordinate system, $V_{yc}$ represents a speed of the static target in a y-direction in the vehicle coordinate system, $(V_{xr}, V_{yr})$ represents speed information of the static target in the radar coordinate system, $V_{xr}$ represents a speed of the static target in an x-direction in the radar coordinate system, and $V_{yr}$ represents a speed of the static target in a y-direction in the radar coordinate system.

It can be learned that in this embodiment of this application, the measurement information in the radar coordinate system may be transformed into measurement information in the vehicle coordinate system, and both the location information and the speed information are correspondingly transformed, so that vehicle positioning can be completed from a perspective of the self-vehicle. Therefore, feasibility of the solution is improved.

Optionally, based on the embodiment corresponding to FIG. 18, in another embodiment of the vehicle positioning apparatus 50 provided in this embodiment of this application,

the determining module 502 is specifically configured to: calculate an occupation probability of each grid unit in a grid area based on the road boundary information and the historical road boundary information, where the grid area covers the target vehicle, and the grid area includes a plurality of grid units;
obtain a probability grid map based on the occupation probability of each grid unit in the grid area;
determine fused boundary information based on a target grid unit in the probability grid map, where an occupation probability of the target grid unit is greater than a preset probability threshold; and
calculate the road curvature information based on the fused boundary information.

It can be learned that in this embodiment of this application, a local probability grid map of the vehicle may be obtained by fusing measurement information in a plurality of frames, road boundary information, and historical road boundary information, and the road curvature information may be calculated from the probability grid map. This helps improve feasibility of the solution.

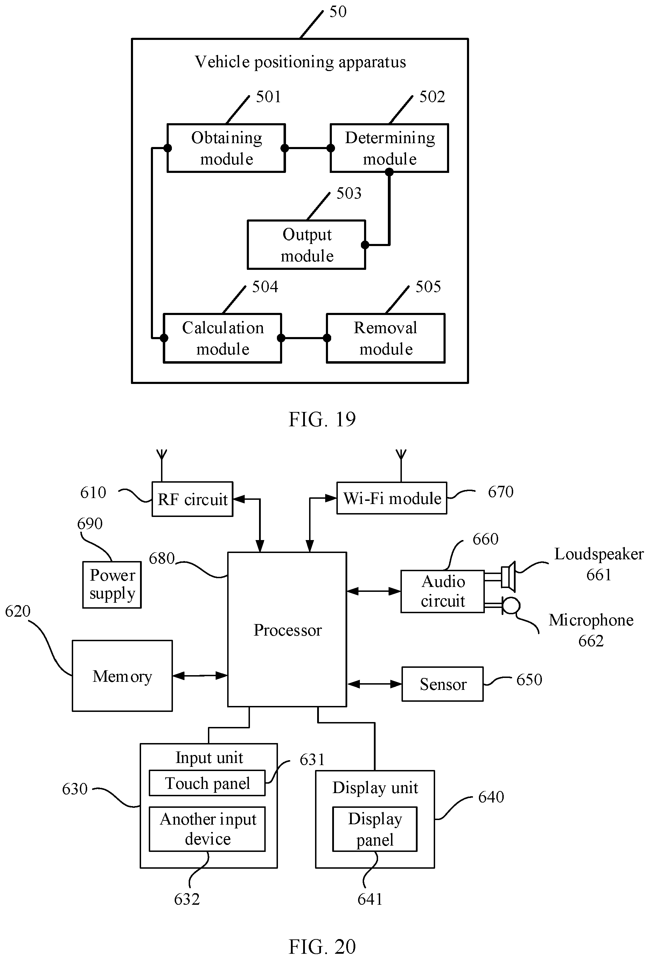

Optionally, based on the embodiment corresponding to FIG. 18 or FIG. 19, in another embodiment of the vehicle positioning apparatus 50 provided in this embodiment of this application,

the determining module 502 is specifically configured to calculate the occupation probability of each grid unit in the following manner:

$$p_n(x_c, y_c) = \min(p(x_c, y_c) + p_{n-1}(x_c, y_c), 1),$$

and

$$p(x_c, y_c) = \frac{1}{\sqrt{2|S|}} \exp(-\frac{1}{2}((x_c, y_c) - (x_c, y_c)')^T S^{-1}((x_c, y_c) - (x_c, y_c)')),$$

where

$p_n(x_c, y_c)$ represents an occupation probability of a grid unit in an $n^{th}$ frame, $p(x_c, y_c)$ represents the road boundary information, $p_{n-1}(x_c, y_c)$ represents historical road boundary information in an $(n-1)^{th}$ frame, $x_c$ represents the x-coordinate of the static target in the vehicle coordinate system, $y_c$ represents the y-coordinate of the static target in the vehicle coordinate system, $(x_c, y_c)$ represents the location information of the static target in the vehicle coordinate system, $(x_c, y_c)'$ represents an average value of location information of the static target in the vehicle coordinate system in a plurality of frames, and S represents a covariance between $x_c$ and $y_c$.

It can be learned that in this embodiment of this application, local positioning may be performed based on the static target information obtained by the millimeter wave radars, and weighted averaging may be performed based on the calculated historical road boundary information and the calculated current road boundary information, to obtain stable road boundary information. Therefore, reliability of the solution is improved.

Optionally, based on the embodiment corresponding to FIG. 18 or FIG. 19, in another embodiment of the vehicle positioning apparatus 50 provided in this embodiment of this application,

the determining module 502 is specifically configured to calculate the road curvature information in the following manner:

$$Q = \frac{\left| g_\theta^{"}(x_c) \right|}{(1 + (g_\theta^{'}(x_c))^2)^{3/2}} \, ,$$

where

Q represents the road curvature information, $g_\theta(x_c)$ represents the fused boundary information, $g_\theta^{'}(x_c)$ represents a first-order derivative of $g_\theta(x_c)$, and $g_\theta^{"}(x_c)$ represents a second-order derivative of $g_\theta(x_c)$.

It can be learned that in this embodiment of this application, an implementation of calculating the road curvature information is provided, and required positioning information can be obtained in a specific calculation manner. Therefore, operability of the solution is improved.

Optionally, based on the embodiment corresponding to FIG. 18, referring to FIG. 19, in another embodiment of the vehicle positioning apparatus 50 provided in this embodiment of this application, the vehicle positioning apparatus 50 further includes a calculation module 504 and a removal module 505;

the obtaining module 501 is further configured to: before the determining module determines, based on the measurement information, the current road boundary information corresponding to the current frame moment, obtain candidate static target information and M pieces of reference static target information from the measurement information, where M is an integer greater than 1;

the calculation module 504 is configured to calculate an average distance between the M pieces of reference static target information and the candidate static target information that are obtained by the obtaining module 501; and

the removal module 505 is configured to: remove the candidate static target information from the measurement information if the average distance calculated by the calculation module 504 does not meet the preset static target condition; where

the candidate static target information is any one of the plurality of pieces of static target information, and the reference static target information is static target information with a distance to the candidate static target information less than a preset distance, in the plurality of pieces of static target information.

It can be learned that in this embodiment of this application, the candidate static target information that does not meet the preset static target condition may be removed, and remaining static target information that meets the requirement is used for subsequent positioning calculation and road boundary information calculation. The foregoing manner can effectively improve calculation accuracy.

Optionally, based on the embodiment corresponding to FIG. 19, in another embodiment of the vehicle positioning apparatus 50 provided in this embodiment of this application,

the calculation module 504 is specifically configured to calculate the average distance in the following manner:

$$d = \frac{1}{M} \sum_{i=1}^{M} \sqrt{(P - P_i)^2} \, ,$$

where

d represents the average distance, M represents a quantity of pieces of the reference static information, P represents location information of the candidate static target information, $P_i$ represents location information of an $i^{th}$ piece of reference static information, and i is an integer greater than 0 and less than or equal to M.

It can be learned that in this embodiment of this application, a manner of calculating the average distance is described. The average distance calculated in this manner has comparatively high reliability and is operable.

Optionally, based on the embodiment corresponding to FIG. 19, in another embodiment of the vehicle positioning apparatus 50 provided in this embodiment of this application,

the removal module 505 is specifically configured to: if the average distance is greater than a threshold, determine that the average distance does not meet the preset static target condition, and remove the candidate static target information from the measurement information.

It can be learned that in this embodiment of this application, the candidate static target information with the average distance greater than the threshold may be removed, and remaining static target information that meets the requirement is used for subsequent positioning calculation and road boundary information calculation. The foregoing manner can effectively improve calculation accuracy.

Optionally, based on the embodiment corresponding to FIG. 18 or FIG. 19, in another embodiment of the vehicle positioning apparatus 50 provided in this embodiment of this application,
the determining module 502 is specifically configured to calculate the road boundary information in the following manner:

$$f_\theta\left(x_c\right)=\theta_0+\theta_1\times x_c+\theta_2\times x_c^2+\theta_3\times x_c^3,$$

and

$$\forall(x_c,y_c),f_\theta:\min\left[\sum(f_\theta(x_c)-y_c)^2+\lambda\sum\theta_j^2\right],$$

where

$f_\theta(x_c)$ represents the road boundary information, $\theta_0$ represents a first coefficient, $\theta_1$ represents a second coefficient, $\theta_2$ represents a third coefficient, $\theta_3$ represents a fourth coefficient, $x_c$ represents the x-coordinate of the static target in the vehicle coordinate system, $y_c$ represents the y-coordinate of the static target in the vehicle coordinate system, $(x_c,y_c)$ represents the location information of the static target in the vehicle coordinate system, $\lambda$ represents a regularization coefficient, $\theta_j$ represents a $j^{th}$ coefficient, and j is an integer greater than or equal to 0 and less than or equal to 3.

It can be learned that in this embodiment of this application, a manner of calculating the road boundary information is described. The road boundary information calculated in this manner has comparatively high reliability and is operable.

Optionally, based on the embodiment corresponding to FIG. 18 or FIG. 19, in another embodiment of the vehicle positioning apparatus 50 provided in this embodiment of this application,

the determining module 502 is specifically configured to: calculate stability augmented boundary information at the current frame moment based on the current road boundary information and the historical road boundary information; obtain a first distance from the target vehicle to a left road boundary and a second distance from the target vehicle to a right road boundary based on the stability augmented boundary information at the current frame moment; and calculate the first target positioning information at the current frame moment based on the first distance and the second distance.

It can be learned that in this embodiment of this application, the fused boundary information at the current frame moment may be calculated based on the road boundary information corresponding to the current frame moment and the historical road boundary information, the first distance from the vehicle to the left road boundary and the second distance from the vehicle to the right road boundary may be obtained based on the fused boundary information at the current frame moment, and the first target positioning information at the current frame moment may be finally calculated based on the first distance and the second distance. The foregoing manner can improve reliability of the first target positioning information, provides a feasible manner for implementing the solution, and therefore improves flexibility of the solution.

Optionally, based on the embodiment corresponding to FIG. 18, FIG. 19, or FIG. 20, in another embodiment of the vehicle positioning apparatus 50 provided in this embodiment of this application,
the determining module 502 is specifically configured to calculate, in the following manner, the stability augmented boundary information corresponding to the current frame moment:

$$f_\theta'=\sum\frac{\left|f_{\theta\_w}(x_c)-\mu\right|}{\sum\left|f_{\theta\_w}(x_c)-\mu\right|}f_{\theta\_w}(x_c),w\in[1,W],$$

where

$f_\theta'$ represents the stability augmented boundary information corresponding to the current frame moment, $f_{\theta\_w}(x_c)$ represents historical road boundary information corresponding to a $w^{th}$ frame, W represents a quantity of pieces of the historical road boundary information, $x_c$ represents the x-coordinate of the static target in the vehicle coordinate system,

and $\mu$ represents an average value of historical road boundary information in the W frames.

It can be learned that in this embodiment of this application, a manner of calculating the stability augmented boundary information is described. The fused boundary information calculated in this manner has comparatively high reliability and is operable.

Optionally, based on the embodiment corresponding to FIG. 18 or FIG. 19, in another embodiment of the vehicle positioning apparatus 50 provided in this embodiment of this application,

the determining module 502 is specifically configured to calculate the first target positioning information at the current frame moment in the following manner:

$$Location = \left( ceil\left( R_R - D \right), ceil\left( R_L - D \right) \right),$$

and

$$D = \left( R_L + R_R \right) / N,$$

where

*Location* represents the first target positioning information at the current frame moment, *ceil* represents a rounding-up calculation manner, $R_L$ represents the first distance from the target vehicle to the left road boundary, $R_R$ represents the second distance from the target vehicle to the right road boundary, D represents a lane width, and N represents a quantity of the lanes.

It can be learned that in this embodiment of this application, a manner of calculating the first target positioning information is described. The first target positioning information calculated in this manner has comparatively high reliability and is operable.

Optionally, based on the embodiment corresponding to FIG. 18 or FIG. 19, in another embodiment of the vehicle positioning apparatus 50 provided in this embodiment of this application, the measurement information further includes at least one piece of moving target information;

the obtaining module 501 is further configured to: before the determining module 502 determines the first target positioning information based on the current road boundary information, obtain the at least one piece of moving target information from the measurement information, where each piece of moving target information carries a target sequence number, and the target sequence number is used to identify a different moving target;

the determining module is further configured to determine lane occupation information based on the at least one piece of moving target information obtained by the obtaining module and corresponding historical moving target information; and

the determining module is further configured to determine, based on the lane occupation information, second target positioning information corresponding to the current frame moment, where the second target positioning information is used to indicate the location of the target vehicle on the road.

It can be learned that in this embodiment of this application, the millimeter wave radars simultaneously obtain the plurality of pieces of static target information and the moving target information, and calculate the road boundary information based on the static target information and the moving target information, to implement vehicle positioning. The moving target information may be used to assist the static target information, to calculate the road boundary information, so that accurate vehicle positioning can be completed when a vehicle flow is comparatively heavy. Therefore, feasibility and flexibility of the solution are improved, and a positioning confidence level is improved.

Optionally, based on the embodiment corresponding to FIG. 18 or FIG. 19, in another embodiment of the vehicle positioning apparatus 50 provided in this embodiment of this application,

the obtaining module 501 is specifically configured to: obtain moving target information data in $K$ frames based on the at least one piece of moving target information and the historical moving target information corresponding to the at least one piece of moving target information, where $K$ is a positive integer;

obtain an occupation status of a lane $L_k$ in $k$ frames based on the at least one piece of moving target information and the historical moving target information corresponding to the at least one piece of moving target information, where $k$ is an integer greater than 0 and less than or equal to $K$; and

if a lane occupation ratio is less than a preset ratio, determine that the lane $L_k$ is occupied, where the lane occupation ratio is a ratio of the $k$ frames to the $K$ frames; or

if the lane occupation ratio is greater than or equal to the preset ratio, determine that the lane $L_k$ is unoccupied; and

the determining module 502 is specifically configured to determine the unoccupied lane $L_k$ as the second target positioning information corresponding to the current frame moment.

It can be learned that in this embodiment of this application, the moving target information data in the $K$ frames is obtained based on the at least one piece of moving target information at the current frame moment and the historical moving target information corresponding to the at least one piece of moving target information, and the occupation status of the lane $L_k$ in the $k$ images is obtained based on the moving target information at the current frame moment and the historical moving target information. The foregoing manner can be used to determine the occupation status of the lane more accurately. Therefore, practical applicability and reliability of the solution are improved.

Optionally, based on the embodiment corresponding to FIG. 18, FIG. 19, or FIG. 20, in another embodiment of the vehicle positioning apparatus 50 provided in this embodiment of this application,

the determining module 502 is specifically configured to: determine a confidence level of the first target positioning information based on the second target positioning information, where the confidence level is used to indicate a trusted degree of the first target positioning information; and
determine the first target positioning information at the current moment based on the confidence level.

It can be learned that in this embodiment of this application, the second target positioning information determined based on the moving target information may be used to determine the confidence level of the first target positioning information, where the confidence level indicates a trusted degree of interval estimation. Therefore, feasibility and practical applicability of fusion positioning are improved.

An embodiment of the present invention further provides another vehicle positioning apparatus. For ease of description, FIG. 20 merely shows components related to this embodiment of the present invention. For specific technical details that are not disclosed, refer to the method in the embodiments of the present invention. The vehicle positioning apparatus may be any terminal device including a mobile phone, a tablet computer, a personal digital assistant (Personal Digital Assistant, PDA), a point of sales (Point of Sales, POS), an in-vehicle computer, or the like. For example, the vehicle positioning apparatus is a mobile phone.

FIG. 20 is a block diagram of a partial structure of a mobile phone related to a terminal according to an embodiment of the present invention. Referring to FIG. 20, the mobile phone includes components such as a radio frequency (Radio Frequency, RF) circuit 610, a memory 620, an input unit 630, a display unit 640, a sensor 650, an audio circuit 660, a wireless fidelity (wireless fidelity, WiFi) module 670, a processor 680, and a power supply 690. Persons skilled in the art may understand that the structure of the mobile phone shown in FIG. 20 does not constitute a limitation on the mobile phone, and the mobile phone may include more or fewer components than those shown in the figure, or some components may be combined, or a different component deployment may be used.

The following describes the components of the mobile phone in detail with reference to FIG. 20.

The RF circuit 610 may be configured to receive and send signals in an information receiving and sending process or a call process. Particularly, after receiving downlink information from a base station, the RF circuit 610 sends the downlink information to the processor 680 for processing, and sends designed uplink data to the base station. The RF circuit 610 usually includes but is not limited to an antenna, at least one amplifier, a transceiver, a coupler, a low noise amplifier (Low Noise Amplifier, LNA), a duplexer, and the like. In addition, the RF circuit 610 may further communicate with a network and another device through wireless communication. Any communications standard or protocol may be used for the wireless communication, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Messaging Service, SMS), and the like.

The memory 620 may be configured to store a software program and a module. The processor 680 performs various function applications of the mobile phone and data processing by running the software program and the module that are stored in the memory 620. The memory 620 may mainly include a program storage area and a data storage area. The program storage area may store an operating system, an application program required by at least one function (such as a voice playing function and an image playing function), and the like. The data storage area may store data (such as audio data and a phone book) that is created based on use of the mobile phone, and the like. In addition, the memory 620 may include a high speed random access memory, and may further include a nonvolatile memory such as at least one magnetic disk storage component, a flash memory, or another volatile solid-state storage component.

The input unit 630 may be configured to: receive entered digital or character information, and generate key signals input related to user setting and function control of the mobile phone. Specifically, the input unit 630 may include a touch panel 631 and another input device 632. The touch panel 631, also referred to as a touchscreen, can collect a touch operation performed by a user on or near the touch panel 631 (for example, an operation performed by the user on or near the touch panel 631 by using any proper object or accessory such as a finger or a stylus), and can drive a corresponding connection apparatus based on a preset program. Optionally, the touch panel 631 may include two parts: a touch detection apparatus and a touch controller. The touch detection apparatus detects a touch direction of the user, detects a signal brought by a touch operation, and transfers the signal to the touch controller. The touch controller receives touch information from the touch detection apparatus, converts the touch information into coordinates of a touch point, sends the coordinates to the processor 680, and can receive and execute a command sent by the processor 680. In addition, the touch panel 631 may be implemented by using a plurality of types such as a resistive type, a capacitive type, an infrared type, and a surface acoustic wave type. In addition to the touch panel 631, the input unit 630 may further include the another input device 632. Specifically, the another input device 632 may include but is not limited to one or more of a physical keyboard, a function key (such as a volume control key or an on/off key), a trackball, a mouse, a joystick, and the like.

The display unit 640 may be configured to display information entered by the user or information provided for the user, and various menus of the mobile phone. The display unit 640 may include a display panel 641. Optionally, a form such as a liquid crystal display (Liquid Crystal Display, LCD) or an organic light-emitting diode (Organic Light-Emitting Diode, OLED) may be used to configure the display panel 641. Further, the touch panel 631 may cover the display panel 641. When detecting a touch operation on or near the touch panel 631, the touch panel 631 transfers the touch operation to the processor 680 to determine a type of a touch event, and then the processor 680 provides corresponding visual output on the display panel 641 based on the type of the touch event. In FIG. 20, the touch panel 631 and the display panel 641 are used as two independent components to implement input and input functions of the mobile phone. However, in some embodiments, the touch panel 631 and the display panel 641 may be integrated to implement the input and output functions of the mobile phone.

The mobile phone may further include at least one sensor 650, such as a light sensor, a motion sensor, and another sensor. Specifically, the light sensor may include an ambient light sensor and a proximity sensor. The ambient light sensor may adjust luminance of the display panel 641 based on brightness of ambient light. When the mobile phone approaches to an ear, the proximity sensor may turn off the display panel 641 and/or backlight. As a type of motion sensor, an acceleration sensor may detect values of acceleration in directions (usually three axes), may detect, in a static state, a value and a direction of gravity, and may be used for an application that identifies a posture (such as screen switching between a landscape mode and a portrait mode, a related game, and magnetometer posture calibration) of the mobile phone, a vibration-identification-related function (such as a pedometer and tapping), and the like. Other sensors that can be configured on the mobile phone such as a gyroscope, a barometer, a hygrometer, a thermometer, and an infrared sensor are not described herein.

The audio circuit 660, a loudspeaker 661, and a microphone 662 may provide an audio interface between the user and the mobile phone. The audio circuit 660 may transmit, to the loudspeaker 661, an electrical signal that is obtained after conversion of received audio data, and the loudspeaker 661 converts the electrical signal into an acoustic signal and outputs the acoustic signal. In addition, the microphone 662 converts a collected acoustic signal into an electrical signal, the audio circuit 660 receives and converts the electrical signal into audio data, and outputs the audio data to the processor 680 for processing, and then processed audio data is sent to, for example, another mobile phone, by using the RF circuit 610, or the audio data is output to the memory 620 for further processing.

Wi-Fi belongs to a short-distance wireless transmission technology. The mobile phone may help, by using the Wi-Fi module 670, the user receive and send an email, browse a web page, access streaming media, and the like. The Wi-Fi module 670 provides wireless broadband internet access for the user. Although the Wi-Fi module 670 is shown in FIG. 20, it should be understood that the Wi-Fi module 670 is not a necessary component of the mobile phone, and may be omitted based on a requirement without changing the essence of the present invention.

The processor 680 is a control center of the mobile phone, connects each part of the entire mobile phone by using various interfaces and lines, and executes various functions and processes data of the mobile phone by running or executing the software program and/or the module stored in the memory 620 and invoking data stored in the memory 620, to perform overall monitoring on the mobile phone. Optionally, the processor 680 may include one or more processing units. For example, an application processor and a modem processor may be integrated into the processor 680. The application processor mainly processes an operating system, a user interface, an application program, and the like; and the modem processor mainly processes wireless communication. It may be understood that the modem processor may alternatively not be integrated into the processor 680.

The mobile phone further includes the power supply 690 (such as a battery) that supplies power to each component. Optionally, the power supply may be logically connected to the processor 680 by using a power management system, so that functions such as management of charging, discharging, and power consumption are implemented by using the power management system.

Although not shown, the mobile phone may further include a camera, a Bluetooth module, and the like. Details are not described herein.

In this embodiment of the present invention, the processor 680 included in the terminal further has the following functions:

obtaining measurement information within preset angle coverage at a current frame moment by using a measurement device, where the measurement information includes a plurality of pieces of static target information, the plurality of pieces of static target information are used to indicate information about a plurality of static targets, and the plurality of pieces of static target information have a one-to-one correspondence with the information about the plurality of static targets;

determining, based on the measurement information, current road boundary information corresponding to the current frame moment;

determining first target positioning information based on the current road boundary information, where the first target positioning information is used to indicate a location of a target vehicle on a road;

determining road curvature information based on the current road boundary information and historical road boundary information, where the road curvature information is used to indicate a bending degree of the road on which the target vehicle is located, the historical road boundary information includes road boundary information corresponding to at least one historical frame moment, and the historical frame moment is a moment that is before the current frame moment and at which the road boundary information and road curvature information are obtained; and

outputting the first target positioning information and the road curvature information.

Optionally, the processor 680 is specifically configured to perform the following steps:

obtaining tracking information of the plurality of static targets within the preset angle coverage by using millimeter wave radars, where the tracking information includes location information and speed information of the plurality of static targets in a radar coordinate system; and

calculating the measurement information based on the tracking information and calibration parameters of the millimeter wave radars, where the measurement information includes location information and speed information of the plurality of static targets in a vehicle coordinate system, and the calibration parameters include a rotation quantity and a translation quantity.

Optionally, the processor 680 is specifically configured to perform the following steps:

the preset angle coverage includes first preset angle coverage and second preset angle coverage; and
the obtaining tracking information of the plurality of static targets within the preset angle coverage by using millimeter wave radars includes:

obtaining first tracking information of a plurality of first static targets within the first preset angle coverage by using a first millimeter wave radar, and obtaining second tracking information of a plurality of second static targets within the second preset angle coverage by using a second millimeter wave radar, where the tracking information includes the first tracking information and the second tracking information, the plurality of static targets include the plurality of first static targets and the plurality of second static targets, the millimeter wave radars include the first millimeter wave radar and the second millimeter wave radar, and a detection distance and a coverage field of view of the first millimeter wave radar are different from a detection distance and a coverage field of view of the second millimeter wave radar; and

calculating first measurement information within the first preset angle coverage based on the first tracking information and a calibration parameter of the millimeter wave radar, and calculating second measurement information within the second preset angle coverage based on the second tracking information and a calibration parameter of the millimeter wave radar, where the measurement information includes the first measurement information and the second measurement information.

Optionally, the processor 680 is specifically configured to perform the following step:
calculating the measurement information in the following manner:

$$\left(x_c, y_c\right) = R \times \left(x_r, y_r\right) + T \,,$$

and

$$\left(V_{xc}, V_{yc}\right) = R \times \left(V_{xr}, V_{yr}\right),$$

where

$(x_c, y_c)$ represents location information of a static target in the vehicle coordinate system, $x_c$ represents an x-coordinate of the static target in the vehicle coordinate system, $y_c$ represents a y-coordinate of the static target in the vehicle coordinate system, $(x_r, y_r)$ represents location information of the static target in the radar coordinate system, $x_r$ represents an x-coordinate of the static target in the radar coordinate system, $y_r$ represents a y-coordinate of the static target in the radar coordinate system, $R$ represents the rotation quantity, $T$ represents the translation quantity, $(V_{xc}, V_{yc})$ represents speed information of the static target in the vehicle coordinate system, $V_{xc}$ represents a speed of the static target in an x-direction in the vehicle coordinate system, $V_{yc}$ represents a speed of the static target in a y-direction in the vehicle coordinate system, $(V_{xr}, V_{yr})$ represents speed information of the static target in the radar coordinate system, $V_{xr}$ represents a speed of the static target in an x-direction in the radar coordinate system, and $V_{yr}$ represents a speed of the static target in a y-direction in the radar coordinate system.

Optionally, the processor 680 is further configured to perform the following steps:

calculating an occupation probability of each grid unit in a grid area based on the road boundary information and the historical road boundary information, where the grid area covers the target vehicle, and the grid area includes a plurality of grid units;
obtaining a probability grid map based on the occupation probability of each grid unit in the grid area;
determining fused boundary information based on a target grid unit in the probability grid map, where an occupation probability of the target grid unit is greater than a preset probability threshold; and
calculating the road curvature information based on the fused boundary information.

Optionally, the processor 680 is specifically configured to perform the following step:
calculating the occupation probability of each grid unit in the following manner:

$$p_n(x_c, y_c) = \min(p(x_c, y_c) + p_{n-1}(x_c, y_c), 1),$$

and

$$p(x_c, y_c) = \frac{1}{\sqrt{2|S|}} \exp(-\frac{1}{2}((x_c, y_c) - (x_c, y_c)')^T S^{-1}((x_c, y_c) - (x_c, y_c)')),$$

where

$p_n(x_c, y_c)$ represents an occupation probability of a grid unit in an $n^{th}$ frame, $p(x_c, y_c)$ represents the road boundary information, $p_{n-1}(x_c, y_c)$ represents historical road boundary information in an $(n-1)^{th}$ frame, $x_c$ represents the x-coordinate of the static target in the vehicle coordinate system, $y_c$ represents the y-coordinate of the static target in the vehicle coordinate system, $(x_c, y_c)$ represents the location information of the static target in the vehicle coordinate system, $(x_c, y_c)'$ represents an average value of location information of the static target in the vehicle coordinate system in a plurality of frames, and S represents a covariance between $x_c$ and $y_c$.

Optionally, the processor 680 is specifically configured to perform the following step:
calculating the road curvature information in the following manner:

$$Q = \frac{\left|g_\theta{}''(x_c)\right|}{(1 + (g_\theta{}'(x_c))^2)^{3/2}},$$

where

$Q$ represents the road curvature information, $g_\theta(x_c)$ represents the fused boundary information, $g_\theta{}'(x_c)$ represents a first-order derivative of $g_\theta(x_c)$, and $g_\theta{}''(x_c)$ represents a second-order derivative of $g_\theta(x_c)$.

Optionally, the processor 680 is further configured to perform the following steps:

obtaining candidate static target information and M pieces of reference static target information from the measurement information, where M is an integer greater than 1;
calculating an average distance between the M pieces of reference static target information and the candidate static target information; and
removing the candidate static target information from the measurement information if the average distance does not meet the preset static target condition; where
the candidate static target information is any one of the plurality of pieces of static target information, and the reference static target information is static target information with a distance to the candidate static target information less than a preset distance, in the plurality of pieces of static target information.

Optionally, the processor 680 is specifically configured to perform the following step:
calculating the average distance in the following manner:

$$d = \frac{1}{M} \sum_{i=1}^{M} \sqrt{(P - P_i)^2},$$

where
d represents the average distance, M represents a quantity of pieces of the reference static information, $P$ represents location information of the candidate static target information, $P_i$ represents location information of an $i^{th}$ piece of reference static information, and $i$ is an integer greater than 0 and less than or equal to M.

Optionally, the processor 680 is specifically configured to perform the following step:
if the average distance is greater than a threshold, determining that the average distance does not meet the preset static target condition, and removing the candidate static target information from the measurement information.

Optionally, the processor 680 is specifically configured to perform the following step:
calculating the road boundary information in the following manner:

$$f_\theta(x_c) = \theta_0 + \theta_1 \times x_c + \theta_2 \times x_c^2 + \theta_3 \times x_c^3,$$

and

$$\forall (x_c, y_c), f_\theta : \min \left[ \sum (f_\theta(x_c) - y_c)^2 + \lambda \sum \theta_j^2 \right],$$

where
$f_\theta(x_c)$ represents the road boundary information, $\theta_0$ represents a first coefficient, $\theta_1$ represents a second coefficient, $\theta_2$ represents a third coefficient, $\theta_3$ represents a fourth coefficient, $x_c$ represents the x-coordinate of the static target in the vehicle coordinate system, $y_c$ represents the y-coordinate of the static target in the vehicle coordinate system, $(x_c, y_c)$ represents the location information of the static target in the vehicle coordinate system, $\lambda$ represents a regularization coefficient, $\theta_j$ represents a $j^{th}$ coefficient, and $j$ is an integer greater than or equal to 0 and less than or equal to 3.

Optionally, the processor 680 is specifically configured to perform the following steps:

calculating stability augmented boundary information at the current frame moment based on the current road boundary information and the historical road boundary information;
obtaining a first distance from the target vehicle to a left road boundary and a second distance from the target vehicle to a right road boundary based on the stability augmented boundary information at the current frame moment; and calculating the first target positioning information at the current frame moment based on the first distance and the second distance.

Optionally, the processor 680 is specifically configured to perform the following step:
calculating, in the following manner, the stability augmented boundary information corresponding to the current frame moment:

$$f_\theta' = \sum \frac{|f_{\theta\_w}(x_c) - \mu|}{\sum |f_{\theta\_w}(x_c) - \mu|} f_{\theta\_w}(x_c), w \in [1, W],$$

and

$f_\theta'$ represents the stability augmented boundary information corresponding to the current frame moment, $f_{\theta\_w}(x_c)$ represents historical road boundary information corresponding to a $W^{th}$ frame, W represents a quantity of pieces of the historical road boundary information, $x_c$ represents the x-coordinate of the static target in the vehicle coordinate system, and $\mu$ represents an average value of historical road boundary information in the W frames.

Optionally, the processor 680 is specifically configured to perform the following step:

calculating the first target positioning information at the current frame moment in the following manner:

$$Location = \left( ceil\left( R_R - D \right), ceil\left( R_L - D \right) \right),$$

and

$$D = \left( R_L + R_R \right) / N,$$

where

*Location* represents the first target positioning information at the current frame moment, *ceil* represents a rounding-up calculation manner, $R_L$ represents the first distance from the target vehicle to the left road boundary, $R_R$ represents the second distance from the target vehicle to the right road boundary, D represents a lane width, and N represents a quantity of the lanes.

Optionally, the processor 680 is further configured to perform the following steps:

obtaining the at least one piece of moving target information from the measurement information, where each piece of moving target information carries a target sequence number, and the target sequence number is used to identify a different moving target;

determining lane occupation information based on the at least one piece of moving target information and corresponding historical moving target information; and

determining, based on the lane occupation information, second target positioning information corresponding to the current frame moment, where the second target positioning information is used to indicate the location of the target vehicle on the road.

Optionally, the processor 680 is specifically configured to perform the following steps:

obtaining moving target information data in *K* frames based on the at least one piece of moving target information and the historical moving target information corresponding to the at least one piece of moving target information, where *K* is a positive integer;

obtaining an occupation status of a lane $L_k$ in *k* frames based on the at least one piece of moving target information and the historical moving target information corresponding to the at least one piece of moving target information, where *k* is an integer greater than 0 and less than or equal to *K* ; and

if a lane occupation ratio is less than a preset ratio, determining that the lane $L_k$ is occupied, where the lane occupation ratio is a ratio of the *k* frames to the *K* frames; or

if the lane occupation ratio is greater than or equal to the preset ratio, determining that the lane $L_k$ is unoccupied, and determining the unoccupied lane $L_k$ as the second target positioning information corresponding to the current frame moment.

Optionally, the processor 680 is specifically configured to perform the following steps:

determining a confidence level of the first target positioning information based on the second target positioning information, where the confidence level is used to indicate a trusted degree of the first target positioning information; and

determining the first target positioning information at the current moment based on the confidence level.

All or some of the foregoing embodiments may be implemented by using software, hardware, firmware, or any combination thereof. When the software is used to implement the embodiments, all or some of the embodiments may be implemented in a form of a computer program product.

The computer program product includes one or more computer instructions. When the computer program instructions are loaded and executed on a computer, all or some of the procedures or functions according to the embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the modules is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of this invention as defined in the appended claims.

**Claims**

**1.** A vehicle positioning method, comprising:

obtaining (201) measurement information within preset angle coverage at a current frame moment by using a measurement device, wherein the measurement information comprises a plurality of pieces of static target information, the plurality of pieces of static target information are used to indicate information about a plurality of static targets, and the plurality of pieces of static target information have a one-to-one correspondence with the information about the plurality of static targets;

determining (202), based on the measurement information, current road boundary information corresponding to the current frame moment;

determining (203) first target positioning information based on the current road boundary information, wherein the first target positioning information is used to indicate a location of a target vehicle on a road;

determining (204) road curvature information based on the current road boundary information and historical road boundary information, wherein the road curvature information is used to indicate a bending degree of the road on which the target vehicle is located, the historical road boundary information comprises road boundary information corresponding to at least one historical frame moment, and the historical frame moment is a moment that is before the current frame moment and at which the road boundary information and road curvature information are obtained; and

outputting (205) the first target positioning information and the road curvature information, **characterized in that** the obtaining measurement information within preset angle coverage by using a measurement device comprises:

obtaining tracking information of the plurality of static targets within the preset angle coverage by using millimeter wave radars, wherein the tracking information comprises location information and speed information of the plurality of static targets in a radar coordinate system; and

calculating the measurement information based on the tracking information and calibration parameters of the millimeter wave radars, wherein the measurement information comprises location information and speed information of the plurality of static targets in a vehicle coordinate system, and the calibration parameters comprise a rotation quantity and a translation quantity for transforming from the radar coordinate system to the vehicle coordinate system,

wherein the preset angle coverage comprises first preset angle coverage and second preset angle coverage; wherein the obtaining tracking information of the plurality of static targets within the preset angle coverage by using millimeter wave radars comprises:

obtaining first tracking information of a plurality of first static targets within the first preset angle coverage by using a first millimeter wave radar, and obtaining second tracking information of a plurality of second static targets within the second preset angle coverage by using a second millimeter wave radar, wherein the tracking information comprises the first tracking information and the second tracking information, the plurality of static targets comprise the plurality of first static targets and the plurality of second static targets, the millimeter wave radars comprise the first millimeter wave radar and the second millimeter wave radar, and a detection distance and a coverage field of view of the first millimeter wave radar are different from a detection distance and a coverage field of view of the second millimeter wave radar; and wherein the calculating the measurement information based on the tracking information and calibration parameters of the millimeter wave radars comprises:

calculating first measurement information within the first preset angle coverage based on the first tracking information and a calibration parameter of the millimeter wave radar, and calculating second measurement information within the second preset angle coverage based on the second tracking information and a calibration parameter of the millimeter wave radar, wherein the measurement information comprises the first measurement information and the second measurement information.

2. The method according to claim 1, wherein the determining road curvature information based on the road boundary information and historical road boundary information comprises:

calculating an occupation probability of each grid unit in a grid area based on the road boundary information and the historical road boundary information, wherein the grid area covers the target vehicle, and the grid area comprises a plurality of grid units;

obtaining a probability grid map based on the occupation probability of each grid unit in the grid area;

determining fused boundary information based on a target grid unit in the probability grid map, wherein an occupation probability of the target grid unit is greater than a preset probability threshold; and

calculating the road curvature information based on the fused boundary information.

3. The method according to any one of claims 1 to 2, wherein before the determining, based on the measurement information, current road boundary information corresponding to the current frame moment, the method further comprises:

obtaining candidate static target information and M pieces of reference static target information from the measurement information, wherein M is an integer greater than 1;

calculating an average distance between the M pieces of reference static target information and the candidate static target information; and

removing the candidate static target information from the measurement information if the average distance does not meet a preset static target condition; wherein
the candidate static target information is any one of the plurality of pieces of static target information, and the reference static target information is static target information with a distance to the candidate static target information less than a preset distance, in the plurality of pieces of static target information.

4. The method according to any one of claims 1 to 3, wherein the determining first target positioning information based on the road boundary information corresponding to the current frame moment comprises:

calculating stability augmented boundary information at the current frame moment based on the current road boundary information and the historical road boundary information,
wherein the stability augmented boundary information corresponding to the current frame moment is:

$$ f_{\theta}^{'} = \sum \frac{\left| f_{\theta\_w}(x_c) - \mu \right|}{\sum \left| f_{\theta\_w}(x_c) - \mu \right|} f_{\theta\_w}(x_c), w \in [1, W], $$

where

$f_{\theta}^{'}$ represents the stability augmented boundary information corresponding to the current frame moment, $f_{\theta\_w}(x_c)$ represents the historical road boundary information corresponding to a $W^{th}$ frame, W represents a quantity of pieces of the historical road boundary information, $x_c$ represents an x-coordinate of the static target in the vehicle coordinate system, and $\mu$ represents an average value of historical road boundary information in the W frames;
obtaining a first distance from the target vehicle to a left road boundary and a second distance from the target vehicle to a right road boundary based on the stability augmented boundary information at the current frame moment; and
calculating the first target positioning information at the current frame moment based on the first distance and the second distance.

5. The method according to any one of claims 1 to 4, wherein the measurement information further comprises at least one piece of moving target information, and before the determining first target positioning information based on the current road boundary information, the method further comprises:

obtaining the at least one piece of moving target information from the measurement information, wherein each piece of moving target information carries a target sequence number, and the target sequence number is used to identify a different moving target;
determining lane occupation information based on the at least one piece of moving target information and corresponding historical moving target information; and
determining, based on the lane occupation information, second target positioning information corresponding to the current frame moment, wherein the second target positioning information is used to indicate the location of the target vehicle on the road.

6. The method according to claim 5, wherein the determining first target positioning information based on the road boundary information corresponding to the current frame moment comprises:

determining a confidence level of the first target positioning information based on the second target positioning information, wherein the confidence level is used to indicate a trusted degree of the first target positioning information; and
determining the first target positioning information at the current moment based on the confidence level.

7. A vehicle positioning apparatus (50), comprising:

an obtaining module (501), configured to obtain measurement information within preset angle coverage at a current frame moment by using a measurement device, wherein the measurement information comprises a plurality of pieces of static target information, the plurality of pieces of static target information are used to indicate information about a plurality of static targets, and the plurality of pieces of static target information have a one-to-one correspondence with the information about the plurality of static targets;
a determining module (502), configured to determine, based on the measurement information obtained by the obtaining module, current road boundary information corresponding to the current frame moment; wherein the determining module (502) is configured to determine first target positioning information based on the current road boundary information, wherein the first target positioning information is used to indicate a location of a target vehicle on a road; and
the determining module (502) is configured to determine road curvature information based on the current road boundary information and historical road boundary information, wherein the road curvature information is used to indicate a bending degree of the road on which the target vehicle is located, the historical road boundary information comprises road boundary information corresponding to at least one historical frame moment, and the historical frame moment is a moment that is before the current frame moment and at which the road boundary information and road curvature information are obtained; and
an output module (503), configured to output the first target positioning information determined by the determining module and the road curvature information determined by the determining module,
**characterized in that**:

the obtaining module (501) is specifically configured to: obtain tracking information of the plurality of static targets within the preset angle coverage by using millimeter wave radars, wherein the tracking information comprises location information and speed information of the plurality of static targets in a radar coordinate system; and
calculate the measurement information based on the tracking information and calibration parameters of the millimeter wave radars, wherein the measurement information comprises location information and speed information of the plurality of static targets in a vehicle coordinate system, and the calibration parameters comprise a rotation quantity and a translation quantity for transforming from the radar coordinate system to the vehicle coordinate system,
wherein the preset angle coverage comprises first preset angle coverage and second preset angle coverage; wherein
the obtaining module (501) is specifically configured to: obtain first tracking information of a plurality of first static targets within the first preset angle coverage by using a first millimeter wave radar, and obtain second tracking information of a plurality of second static targets within the second preset angle coverage by using a second millimeter wave radar, wherein the tracking information comprises the first tracking information and the second tracking information, the plurality of static targets comprise the plurality of first static targets and the plurality of second static targets, the millimeter wave radars comprise the first millimeter wave radar and the second millimeter wave radar, and a detection distance and a coverage field of view of the first millimeter wave radar are different from a detection distance and a coverage field of view of the second millimeter wave radar; and wherein the obtaining module (501) is specifically configured to:
calculate first measurement information within the first preset angle coverage based on the first tracking information and a calibration parameter of the millimeter wave radar, and calculate second measurement information within the second preset angle coverage based on the second tracking information and a calibration parameter of the millimeter wave radar, wherein the measurement information comprises the first measurement information and the second measurement information.

8. The vehicle positioning apparatus according to claim 7, wherein

the determining module (502) is specifically configured to: calculate an occupation probability of each grid unit in a grid area based on the road boundary information and the historical road boundary information, wherein the grid area covers the target vehicle, and the grid area comprises a plurality of grid units;
obtain a probability grid map based on the occupation probability of each grid unit in the grid area;
determine fused boundary information based on a target grid unit in the probability grid map, wherein an occupation probability of the target grid unit is greater than a preset probability threshold; and
calculate the road curvature information based on the fused boundary information.

9. The vehicle positioning apparatus according to any one of claims 7 to 8, wherein the vehicle positioning apparatus further comprises a calculation module and a removal module;

the obtaining module (501) is further configured to: before the determining module determines, based on the measurement information, the current road boundary information corresponding to the current frame moment, obtain candidate static target information and M pieces of reference static target information from the measurement information, wherein M is an integer greater than 1;
the calculation module is configured to calculate an average distance between the M pieces of reference static target information and the candidate static target information that are obtained by the obtaining module; and
the removal module is configured to: remove the candidate static target information from the measurement information if the average distance calculated by the calculation module does not meet a preset static target condition; wherein
the candidate static target information is any one of the plurality of pieces of static target information, and the reference static target information is static target information with a distance to the candidate static target information less than a preset distance, in the plurality of pieces of static target information.

10. The vehicle positioning apparatus according to claim 9, wherein
the removal module is specifically configured to: if the average distance is greater than a threshold, determine that the average distance does not meet the preset static target condition, and remove the candidate static target information from the measurement information.

11. A computer-readable storage medium, comprising an instruction, wherein when the instruction is run on a computer, the computer is enabled to perform the method according to any one of claims 1 to 6.

**Patentansprüche**

1. Fahrzeugpositionierungsverfahren, das Folgendes umfasst:

Erhalten (201) von Messinformationen innerhalb eines voreingestellten Erfassungswinkels zu einem aktuellen Einzelbildmoment durch Verwenden einer Messvorrichtung, wobei die Messinformationen mehrere Statisches-Ziel-Informationselemente umfassen, wobei die mehreren Statisches-Ziel-Informationselemente verwendet werden, um Informationen über mehrere statische Ziele anzugeben, und die mehreren Statisches-Ziel-Informationselemente eine Einszu-Eins-Entsprechung mit den Informationen über die mehreren statischen Ziele aufweisen;
Bestimmen (202), basierend auf den Messinformationen, aktueller Straßengrenzinformationen, die dem aktuellen Einzelbildmoment entsprechen;
Bestimmen (203) von ersten Zielpositionierungsinformationen basierend auf den aktuellen Straßengrenzinformationen, wobei die ersten Zielpositionierungsinformationen verwendet werden, um einen Ort eines Zielfahrzeugs auf einer Straße anzugeben;
Bestimmen (204) von Straßenbiegungsinformationen basierend auf den aktuellen Straßengrenzinformationen und historischen Straßengrenzinformationen, wobei die Straßenbiegungsinformationen verwendet werden, um einen Kurvengrad der Straße anzugeben, auf der sich das Zielfahrzeug befindet, die historischen Straßengrenzinformationen Straßengrenzinformationen umfassen, die wenigstens einem historischen Einzelbildmoment entsprechen, und der historische Einzelbildmoment ein Moment ist, der vor dem aktuellen Einzelbildmoment liegt und zu dem die Straßengrenzinformationen und Straßenbiegungsinformationen erhalten werden; und
Ausgeben (205) der ersten Zielpositionierungsinformationen und der Straßenbiegungsinformationen,
**dadurch gekennzeichnet, dass** das Erhalten von Messinformationen innerhalb des voreingestellten Erfassungswinkels durch Verwenden einer Messvorrichtung Folgendes umfasst:

Erhalten von Trackinginformationen der mehreren statischen Ziele innerhalb des voreingestellten Erfassungswinkels durch Verwenden von Millimeterwellenradaren, wobei die Trackinginformationen Ortsinformationen und
Geschwindigkeitsinformationen der mehreren statischen Ziele in einem Radarkoordinatensystem umfassen; und
Berechnen der Messinformationen basierend auf den Trackinginformationen und Kalibrierungsparametern der Millimeterwellenradare, wobei die Messinformationen Ortsinformationen und Geschwindigkeitsinformationen der mehreren statischen Ziele in einem Fahrzeugkoordinatensystem umfassen und die Kalibrierungsparameter eine Rotationsmenge und eine Verschiebungsmenge zum Transformieren von dem Radarkoordinatensystem in das Fahrzeugkoordinatensystem umfassen,
wobei der voreingestellte Erfassungswinkel einen ersten voreingestellten Erfassungswinkel und einen zweiten voreingestellten Erfassungswinkel umfasst;
wobei das Erhalten von Trackinginformationen der mehreren statischen Ziele innerhalb des voreingestellten Erfassungswinkels durch Verwenden von Millimeterwellenradaren Folgendes umfasst:

Erhalten erster Trackinginformationen mehrerer erster statischer Ziele innerhalb des ersten voreingestellten Erfassungswinkels durch Verwenden eines ersten Millimeterwellenradars und Erhalten zweiter Trackinginformationen mehrerer zweiter statischer Ziele innerhalb des zweiten voreingestellten Erfassungswinkels durch Verwenden eines zweiten Millimeterwellenradars, wobei die Trackinginformationen die ersten Trackinginformationen und die zweiten Trackinginformationen umfassen, die mehreren statischen Ziele die mehreren ersten statischen Ziele und die mehreren zweiten statischen Ziele umfassen, die Millimeterwellenradare das erste Millimeterwellenradar und das zweite Millimeterwellenradar umfassen und sich eine Erkennungsdistanz und ein Erfassungssichtfeld des ersten Millimeterwellenradars von einer Erkennungsdistanz und einem Erfassungssichtfeld des zweiten Millimeterwellenradars unterscheiden; und wobei

das Berechnen der Messinformationen basierend auf den Trackinginformationen und Kalibrierungsparametern der Millimeterwellenradare Folgendes umfasst:

Berechnen erster Messinformationen innerhalb des ersten voreingestellten Erfassungswinkels basierend auf den ersten Trackinginformationen und einem Kalibrierungsparameter des Millimeterwellenradars und Berechnen von zweiten Messinformationen innerhalb des zweiten voreingestellten Erfassungswinkels basierend auf den zweiten Trackinginformationen und einem Kalibrierungsparameter des Millimeterwellenradars, wobei die Messinformationen die ersten Messinformationen und die zweiten Messinformationen umfassen.

2. Verfahren nach Anspruch 1, wobei das Bestimmen von Straßenbiegungsinformationen basierend auf den Straßengrenzinformationen und historischen Straßengrenzinformationen Folgendes umfasst:

Berechnen einer Belegungswahrscheinlichkeit jeder Rastereinheit in einem Rasterbereich basierend auf den Straßengrenzinformationen und den historischen Straßengrenzinformationen, wobei der Rasterbereich das Zielfahrzeug erfasst und der Rasterbereich mehrere Rastereinheiten umfasst;
Erhalten einer Wahrscheinlichkeitsrasterkarte basierend auf der Belegungswahrscheinlichkeit jeder Rastereinheit in dem Rasterbereich;
Bestimmen von fusionierten Grenzinformationen basierend auf einer Zielrastereinheit in der Wahrscheinlichkeitsrasterkarte, wobei eine Belegungswahrscheinlichkeit der Zielrastereinheit größer als eine voreingestellte Wahrscheinlichkeitsschwelle ist; und
Berechnen der Straßenbiegungsinformationen basierend auf den fusionierten Grenzinformationen.

3. Verfahren nach einem der Ansprüche 1 bis 2, wobei vor dem Bestimmen, basierend auf den Messinformationen, aktueller Straßengrenzinformationen, die dem aktuellen Einzelbildmoment entsprechen, das Verfahren ferner Folgendes umfasst:

Erhalten von Kandidaten-Statisches-Ziel-Informationen und M Referenz-Statisches-Ziel-Informationselementen aus den Messinformationen, wobei M eine ganze Zahl ist, die größer als 1 ist;
Berechnen einer Durchschnittsdistanz zwischen den M Referenz-Statisches-Ziel-Informationselementen und den Kandidaten-Statisches-Ziel-Informationen; und
Entfernen der Kandidaten-Statisches-Ziel-Informationen aus den Messinformationen, falls die Durchschnittsdistanz eine voreingestellte Bedingung des statischen Ziels nicht erfüllt; wobei
die Kandidaten-Statisches-Ziel-Informationen beliebige der mehreren Statisches-Ziel-Informationselemente sind und die Referenz-Statisches-Ziel-Informationen Statisches-Ziel-Informationen mit einer Distanz zu den Kandidaten-Statisches-Ziel-Informationen sind, die kleiner als eine voreingestellte Distanz in den mehreren Statisches-Ziel-Informationselementen ist.

4. Verfahren nach einem der Ansprüche 1 bis 3, wobei das Bestimmen erster Zielpositionierungsinformationen basierend auf den Straßengrenzinformationen, die dem aktuellen Einzelbildmoment entsprechen, Folgendes umfasst:

Berechnen von stabilitätserhöhten Grenzinformationen zu dem aktuellen Einzelbildmoment basierend auf den aktuellen Straßengrenzinformationen und den historischen Straßengrenzinformationen,
wobei die stabilitätserhöhten Grenzinformationen, die dem aktuellen Einzelbildmoment entsprechen, Folgendes sind:

$$f_{\theta}^{'} = \sum \frac{\left| f_{\theta\_w}(x_c) - \mu \right|}{\sum \left| f_{\theta\_w}(x_c) - \mu \right|} f_{\theta\_w}(x_c), w \in [1, W]$$

,

wobei

$f_{\theta}^{1}$ die stabilitätserhöhten Grenzinformationen darstellt, die dem aktuellen Einzelbildmoment entsprechen, $f_{\theta\_w}(x_c)$ die historischen Straßengrenzinformationen darstellt, die einem $W$-ten Einzelbild entsprechen, W eine Menge von Elementen der historischen Straßengrenzinformationen darstellt, $x_c$ eine x-Koordinate des statischen Ziels in dem Fahrzeugkoordinatensystem darstellt und $\mu$ einen Mittelwert von historischen Straßengrenzinformationen in den W Einzelbildern darstellt;

Erhalten einer ersten Distanz von dem Zielfahrzeug zu einer linken Straßengrenze und einer zweiten Distanz von dem Zielfahrzeug zu einer rechten Straßengrenze basierend auf den stabilitätserhöhten Grenzinformationen zu dem aktuellen Einzelbildmoment; und

Berechnen der ersten Zielpositionierungsinformationen zu dem aktuellen Einzelbildmoment basierend auf der ersten Distanz und der zweiten Distanz.

5. Verfahren nach einem der Ansprüche 1 bis 4, wobei die Messinformationen ferner wenigstens ein Bewegtzielinformationselement umfassen, und wobei vor dem Bestimmen von ersten Zielpositionierungsinformationen basierend auf den aktuellen Straßengrenzinformationen, das Verfahren ferner Folgendes umfasst:

Erhalten des wenigstens einen Bewegtzielinformationselements aus den Messinformationen, wobei jedes Bewegtzielinformationselement eine Zielsequenznummer trägt und die Zielsequenznummer verwendet wird, um ein unterschiedliches Bewegtziel zu identifizieren;

Bestimmen von Spurbelegungsinformationen basierend auf dem wenigstens einen Bewegtzielinformationselement und entsprechenden historischen Bewegtzielinformationen; und

Bestimmen, basierend auf den Spurbelegungsinformationen, von zweiten Zielpositionierungsinformationen, die dem aktuellen Einzelbildmoment entsprechen, wobei die zweiten Zielpositionierungsinformationen verwendet werden, um den Ort des Zielfahrzeugs auf der Straße anzugeben.

6. Verfahren nach Anspruch 5, wobei das Bestimmen erster Zielpositionierungsinformationen basierend auf den Straßengrenzinformationen, die dem aktuellen Einzelbildmoment entsprechen, Folgendes umfasst:

Bestimmen eines Vertrauensniveaus der ersten Zielpositionierungsinformationen basierend auf den zweiten Zielpositionierungsinformationen, wobei das Vertrauensniveau verwendet wird, um einen zuverlässigen Grad der ersten Zielpositionierungsinformationen anzugeben; und

Bestimmen der ersten Zielpositionierungsinformationen zu dem aktuellen Moment basierend auf dem Vertrauensniveau.

7. Fahrzeugpositionierungseinrichtung (50), die Folgendes umfasst:

ein Erhaltungsmodul (501), das konfiguriert ist, um Messinformationen innerhalb des voreingestellten Erfassungswinkels zu einem aktuellen Einzelbildmoment durch Verwenden einer Messvorrichtung zu erhalten, wobei die Messinformationen mehrere Statisches-Ziel-Informationselemente umfassen, wobei die mehreren Statisches-Ziel-Informationselemente verwendet werden, um Informationen über mehrere statische Ziele anzugeben, und die mehreren Statisches-Ziel-Informationselemente eine Einszu-Eins-Entsprechung mit den Informationen über die mehreren statischen Ziele aufweisen;

ein Bestimmungsmodul (502), das konfiguriert ist, um basierend auf den Messinformationen, die durch das Erhaltungsmodul erhalten werden, aktuelle Straßengrenzinformationen, die dem aktuellen Einzelbildmoment entsprechen, zu bestimmen; wobei

das Bestimmungsmodul (502) konfiguriert ist, um erste Zielpositionierungsinformationen basierend auf den aktuellen Straßengrenzinformationen zu bestimmen, wobei die ersten Zielpositionierungsinformationen verwendet werden, um einen Ort eines Zielfahrzeugs auf einer Straße anzugeben; und

das Bestimmungsmodul (502) konfiguriert ist, um Straßenbiegungsinformationen basierend auf den aktuellen Straßengrenzinformationen und historischen Straßengrenzinformationen zu bestimmen, wobei die Straßenbiegungsinformationen verwendet werden, um einen Kurvengrad der Straße anzugeben, auf der sich das Zielfahrzeug befindet, die historischen Straßengrenzinformationen Straßengrenzinformationen umfassen, die wenigstens einem historischen Einzelbildmoment entsprechen, und der historische Einzelbildmoment ein Moment ist, der vor dem aktuellen Einzelbildmoment liegt und zu dem die Straßengrenzinformationen und Straßenbiegungsinformationen erhalten werden; und

ein Ausgabemodul (503), das konfiguriert ist, um die ersten Zielpositionierungsinformationen, die durch das Bestimmungsmodul bestimmt werden, und die Straßenbiegungsinformationen, die durch das Bestimmungsmodul bestimmt werden, auszugeben,
**dadurch gekennzeichnet, dass**:

das Erhaltungsmodul (501) speziell für Folgendes konfiguriert ist: Erhalten von Trackinginformationen der mehreren statischen Ziele innerhalb des voreingestellten Erfassungswinkels durch Verwenden von Millimeterwellenradaren, wobei die Trackinginformationen Ortsinformationen und Geschwindigkeitsinformationen der mehreren statischen Ziele in einem Radarkoordinatensystem umfassen; und
Berechnen der Messinformationen basierend auf den Trackinginformationen und den Kalibrierungsparametern der Millimeterwellenradare, wobei die Messinformationen Ortsinformationen und Geschwindigkeitsinformationen der mehreren statischen Ziele in einem Fahrzeugkoordinatensystem umfassen und die Kalibrierungsparameter eine Rotationsmenge und eine Verschiebungsmenge zum Transformieren von dem Radarkoordinatensystem in das Fahrzeugkoordinatensystem umfassen,
wobei der voreingestellte Erfassungswinkel einen ersten voreingestellten Erfassungswinkel und einen zweiten voreingestellten Erfassungswinkel umfasst; wobei
das Erhaltungsmodul (501) speziell für Folgendes konfiguriert ist: Erhalten von ersten Trackinginformationen von mehreren ersten statischen Zielen innerhalb des ersten voreingestellten Erfassungswinkels durch Verwenden eines ersten Millimeterwellenradars und Erhalten von zweiten Trackinginformationen von mehreren zweiten statischen Zielen innerhalb des zweiten voreingestellten Erfassungswinkels durch Verwenden eines zweiten Millimeterwellenradars, wobei die Trackinginformationen die ersten Trackinginformationen und die zweiten Trackinginformationen umfassen, die mehreren statischen Ziele die mehreren ersten statischen Ziele und die mehreren zweiten statischen Ziele umfassen, die Millimeterwellenradare das erste Millimeterwellenradar und das zweite Millimeterwellenradar umfassen und eine Erkennungsdistanz und ein Erfassungssichtfeld des ersten Millimeterwellenradars sich von einer Erkennungsdistanz und einem Erfassungssichtfeld des zweiten Millimeterwellenradars unterscheiden; und wobei das Erhaltungsmodul (501) speziell für Folgendes konfiguriert ist:
Berechnen von ersten Messinformationen innerhalb des ersten voreingestellten Erfassungswinkels basierend auf den ersten Trackinginformationen und einem Kalibrierungsparameter des Millimeterwellenradars und Berechnen von zweiten Messinformationen innerhalb des zweiten voreingestellten Erfassungswinkels basierend auf den zweiten Trackinginformationen und einem Kalibrierungsparameter des Millimeterwellenradars, wobei die Messinformationen die ersten Messinformationen und die zweiten Messinformationen umfassen.

8. Fahrzeugpositionierungseinrichtung nach Anspruch 7, wobei

das Bestimmungsmodul (502) speziell für Folgendes konfiguriert ist: Berechnen einer Belegungswahrscheinlichkeit jeder Rastereinheit in einem Rasterbereich basierend auf den Straßengrenzinformationen und den historischen Straßengrenzinformationen, wobei der Rasterbereich das Zielfahrzeug erfasst und der Rasterbereich mehrere Rastereinheiten umfasst;
Erhalten einer Wahrscheinlichkeitsrasterkarte basierend auf der Belegungswahrscheinlichkeit jeder Rastereinheit in dem Rasterbereich;
Bestimmen von fusionierten Grenzinformationen basierend auf einer Zielrastereinheit in der Wahrscheinlichkeitsrasterkarte, wobei eine Belegungswahrscheinlichkeit der Zielrastereinheit größer als eine voreingestellte Wahrscheinlichkeitsschwelle ist; und
Berechnen der Straßenbiegungsinformationen basierend auf den fusionierten Grenzinformationen.

9. Fahrzeugpositionierungseinrichtung nach einem der Ansprüche 7 bis 8, wobei die Fahrzeugpositionierungseinrichtung ferner ein Berechnungsmodul und ein Entfernungsmodul umfasst;

das Erhaltungsmodul (501) ferner für Folgendes konfiguriert ist: bevor das Bestimmungsmodul, basierend auf den Messinformationen, die aktuellen Straßengrenzinformationen, die dem aktuellen Einzelbildmoment entsprechen, bestimmt, Erhalten von Kandidaten-Statisches-Ziel-Informationen und M Referenz-Statisches-Ziel-Informationselementen aus den Messinformationen, wobei M eine ganze Zahl ist, die größer als 1 ist;

das Berechnungsmodul konfiguriert ist, um eine Durchschnittsdistanz zwischen den M Referenz-Statisches-Ziel-Informationselementen und den Kandidaten-Statisches-Ziel-Informationen zu berechnen, die durch das Erhaltungsmodul erhalten werden; und

das Entfernungsmodul für Folgendes konfiguriert ist: Entfernen der Kandidaten-Statisches-Ziel-Informationen aus den Messinformationen, falls die Durchschnittsdistanz, die durch das Berechnungsmodul berechnet wird, eine voreingestellte Bedingung des statischen Ziels nicht erfüllt; wobei

die Kandidaten-Statisches-Ziel-Informationen beliebige der mehreren Statisches-Ziel-Informationselemente sind und die Referenz-Statisches-Ziel-Informationen Statisches-Ziel-Informationen mit einer Distanz zu den Kandidaten-Statisches-Ziel-Informationen sind, die kleiner als eine voreingestellte Distanz in den mehreren Statisches-Ziel-Informationselementen ist.

**10.** Fahrzeugpositionierungseinrichtung nach Anspruch 9, wobei
das Entfernungsmodul speziell für Folgendes konfiguriert ist: falls die Durchschnittsdistanz größer als eine Schwelle ist, Bestimmen, dass die Durchschnittsdistanz die voreingestellte Bedingung des statischen Ziels nicht erfüllt, und Entfernen der Kandidaten-Statisches-Ziel-Informationen aus den Messinformationen.

**11.** Computerlesbares Speichermedium, das eine Anweisung umfasst, wobei, wenn die Anweisung auf einem Computer ausgeführt wird, der Computer aktiviert wird, um das Verfahren nach einem der Ansprüche 1 bis 6 durchzuführen.

**Revendications**

**1.** Procédé de positionnement de véhicule, comprenant :

l'obtention (201) d'informations de mesure dans les limites de la couverture angulaire prédéfinie à un moment de trame actuel au moyen d'un dispositif de mesure, les informations de mesure comprenant une pluralité d'éléments d'informations de cible statique, la pluralité d'éléments d'informations de cible statique étant utilisés pour indiquer des informations concernant une pluralité de cibles statiques, et la pluralité d'éléments d'informations de cible statiques ayant une correspondance biunivoque avec les informations concernant la pluralité de cibles statiques ;

la détermination (202), en fonction des informations de mesure, des informations de limite de route actuelle correspondant au moment de trame actuel ;

la détermination (203) des premières informations de positionnement cible en fonction des informations de limite de route actuelles, les premières informations de positionnement cible étant utilisées pour indiquer un emplacement d'un véhicule cible sur une route ;

la détermination (204) des informations de courbure de route en fonction des informations de limite de route actuelles et des informations de limite de route historiques, les informations de courbure de route étant utilisées pour indiquer un degré de flexion de la route sur laquelle se situe le véhicule cible, les informations de limite de route historiques comprenant les informations de limite de route correspondant à au moins un moment de trame historique, et le moment de trame historique étant un moment qui se trouve avant le moment de trame actuel et au niveau duquel les informations de limite de route et les informations de courbure de route sont obtenues ; et

l'émission (205) des premières informations de positionnement cible et des informations de courbure de route, **caractérisé en ce que** l'obtention d'informations de mesure dans les limites d'une couverture angulaire prédéfinie au moyen d'un dispositif de mesure comprend :

l'obtention des informations de suivi de la pluralité de cibles statiques dans les limites de la couverture angulaire prédéfinie au moyen de radars à ondes millimétriques, les informations de suivi comprenant des informations d'emplacement et des informations de vitesse de la pluralité de cibles statiques dans un système de coordonnées radar ; et

le calcul des informations de mesure en fonction des informations de suivi et des paramètres d'étalonnage des radars à ondes millimétriques, les informations de mesure comprenant des informations d'emplacement et des informations de vitesse de la pluralité de cibles statiques dans un système de coordonnées de véhicule, et les paramètres d'étalonnage comprenant une quantité de rotation et une quantité de translation pour la transformation du système de coordonnées radar au système de coordonnées de véhicule,

la couverture angulaire prédéfinie comprenant une première couverture angulaire prédéfinie et une seconde couverture angulaire prédéfinie ;

l'obtention des informations de suivi de la pluralité de cibles statiques dans les limites de la couverture angulaire prédéfinie au moyen de radars à ondes millimétriques comprenant :

l'obtention des premières informations de suivi d'une pluralité de premières cibles statiques dans les limites de la première couverture angulaire prédéfinie au moyen d'un premier radar à ondes millimétriques, et l'obtention de secondes informations de suivi d'une pluralité de secondes cibles statiques dans les limites de la seconde couverture angulaire prédéfinie au moyen d'un second radar à ondes millimétriques, les informations de suivi comprenant les premières informations de suivi et les secondes informations de suivi, la pluralité de cibles statiques comprenant la pluralité de premières cibles statiques et la pluralité de secondes cibles statiques, les radars à ondes millimétriques comprenant le premier radar à ondes millimétriques et le second radar à ondes millimétriques, et une distance de détection et un champ de vision de couverture du premier radar à ondes millimétriques étant différents d'une distance de détection et d'un champ de vision de couverture du second radar à ondes millimétriques ; et le calcul des informations de mesure en fonction des informations de suivi et des paramètres d'étalonnage des radars à ondes millimétriques comprenant :

le calcul des premières informations de mesure dans les limites de la première couverture angulaire prédéfinie en fonction des premières informations de suivi et d'un paramètre d'étalonnage du radar à ondes millimétriques, et le calcul des secondes informations de mesure dans les limites de la seconde couverture angulaire prédéfinie en fonction des secondes informations de suivi et d'un paramètre d'étalonnage du radar à ondes millimétriques, les informations de mesure comprenant les premières informations de mesure et les secondes informations de mesure.

2. Procédé selon la revendication 1, la détermination des informations de courbure de route en fonction des informations de limite de route et des informations de limite de route historiques comprenant :

le calcul d'une probabilité d'occupation de chaque unité de grille dans une zone de grille en fonction des informations de limite de route et des informations de limite de route historiques, la zone de grille couvrant le véhicule cible, et la zone de grille comprenant une pluralité d'unités de grille ;
l'obtention d'une carte de grille de probabilité en fonction de la probabilité d'occupation de chaque unité de grille dans la zone de grille ;
la détermination des informations de limite fusionnées en fonction d'une unité de grille cible dans la carte de grille de probabilité, une probabilité d'occupation de l'unité de grille cible étant supérieure à un seuil de probabilité prédéfini ; et
le calcul des informations de courbure de route en fonction des informations de limite fusionnées.

3. Procédé selon l'une quelconque des revendications 1 à 2, avant la détermination, en fonction des informations de mesure, des informations de limite de route actuelle correspondant au moment de trame actuel, le procédé comprenant en outre :

l'obtention des informations de cible statique candidate et M éléments d'informations de cible statique de référence à partir des informations de mesure, M étant un entier supérieur à 1 ;
le calcul d'une distance moyenne entre les M éléments d'informations de cible statique de référence et les informations de cible statique candidate ; et
la suppression des informations de cible statique candidate des informations de mesure si la distance moyenne ne satisfait pas à une condition de cible statique prédéfinie ;
les informations de cible statique candidate étant l'une quelconque de la pluralité d'éléments d'informations de cible statique, et les informations de cible statique de référence étant des informations de cible statique avec une distance par rapport aux informations de cible statique candidate inférieure à une distance prédéfinie, dans la pluralité d'éléments d'informations de cible statique.

4. Procédé selon l'une quelconque des revendications 1 à 3, la détermination des premières informations de positionnement cible en fonction des informations de limite de route correspondant au moment de trame actuel comprenant :

le calcul des informations de limite de stabilité augmentée au moment de trame actuelle en fonction des informations de limite de route actuelles et des informations de limite de route historiques,
les informations de limite de stabilité augmentée correspondant au moment de trame actuel étant :

$$f_{\theta}^{'} = \sum \frac{\left| f_{\theta\_w}(x_c) - \mu \right|}{\sum \left| f_{\theta\_w}(x_c) - \mu \right|} f_{\theta\_w}(x_c), w \in [1, W]$$

,

où

$f_{\theta}^{'}$ représente les informations de limite de stabilité augmentée correspondant au moment de trame actuel, $f_{\theta\_w}(x_c)$ représente les informations de limite de route historiques correspondant à une $W^e$ trame, $W$ représente une quantité d'éléments d'informations de limite de route historiques, $x_c$ représente une coordonnée x de la cible statique dans le système de coordonnées de véhicule, et $\mu$ représente une valeur moyenne d'informations de limite de route historiques dans les $W$ trames ;

l'obtention d'une première distance du véhicule cible à une limite de route gauche et une seconde distance du véhicule cible à une limite de route droite en fonction des informations de limite de stabilité augmentée au moment de trame actuelle ; et

le calcul des premières informations de positionnement cible au moment de trame actuelle en fonction de la première distance et de la seconde distance.

**5.** Procédé selon l'une quelconque des revendications 1 à 4, les informations de mesure comprenant en outre au moins un élément d'informations de cible mobile, et avant la détermination des premières informations de positionnement de cible en fonction des informations de limite de route actuelles, le procédé comprenant en outre :

l'obtention de l'au moins un élément d'informations de cible mobile à partir des informations de mesure, chaque élément d'informations de cible mobile transportant un numéro de séquence cible, et le numéro de séquence cible étant utilisé pour identifier une cible mobile différente ;

la détermination des informations d'occupation de voie en fonction de l'au moins un élément d'informations de cible mobile et des informations de cible mobile historiques correspondantes ; et

la détermination, en fonction des informations d'occupation de voie, des secondes informations de positionnement cible correspondant au moment de trame actuel, les secondes informations de positionnement cible étant utilisées pour indiquer l'emplacement du véhicule cible sur la route.

**6.** Procédé selon la revendication 5, la détermination des premières informations de positionnement cible en fonction des informations de limite de route correspondant au moment de trame actuel comprenant :

la détermination d'un niveau de confiance des premières informations de positionnement cible en fonction des secondes informations de positionnement cible, le niveau de confiance étant utilisé pour indiquer un degré de confiance des premières informations de positionnement cible ; et

la détermination des premières informations de positionnement cible au moment actuel en fonction du niveau de confiance.

**7.** Appareil de positionnement de véhicule (50), comprenant :

un module d'obtention (501), configuré pour obtenir des informations de mesure dans les limites d'une couverture angulaire prédéfinie à un moment de trame actuel au moyen d'un dispositif de mesure, les informations de mesure comprenant une pluralité d'éléments d'informations de cible statique, la pluralité d'éléments d'informations de cible statique étant utilisés pour indiquer des informations concernant une pluralité de cibles statiques, et la pluralité d'éléments d'informations de cible statique ayant une correspondance biunivoque avec les informations concernant la pluralité de cibles statiques ;

un module de détermination (502), configuré pour déterminer, en fonction des informations de mesure obtenues par le module d'obtention, des informations de limite de route actuelles correspondant au moment de trame actuel ;

le module de détermination (502) étant configuré pour déterminer des premières informations de positionnement cible en fonction des informations de limite de route actuelles, les premières informations de positionnement cible étant utilisées pour indiquer un emplacement d'un véhicule cible sur une route ; et

le module de détermination (502) étant configuré pour déterminer des informations de courbure de route en fonction des informations de limite de route actuelles et des informations de limite de route historiques, les informations de courbure de route étant utilisées pour indiquer un degré de flexion de route sur laquelle se situe le véhicule cible, les informations de limite de route historiques comprenant des informations de limite de route correspondant à au moins un moment de trame historique, et le moment de trame historique étant un moment qui se trouve avant le moment de trame actuel et au niveau duquel les informations de limite de route et de courbure de route sont obtenues ; et

un module d'émission (503), configuré pour émettre les premières informations de positionnement cible déterminées par le module de détermination et les informations de courbure de route déterminées par le module de détermination,

**caractérisé en ce que** :

le module d'obtention (501) est spécifiquement configuré pour : obtenir des informations de suivi de la pluralité de cibles statiques dans les limites de la couverture angulaire prédéfinie au moyen des radars à ondes millimétriques, les informations de suivi comprenant des informations d'emplacement et des informations de vitesse de la pluralité de cibles statiques dans un système de coordonnées radar ; et calculer les informations de mesure en fonction des informations de suivi et des paramètres d'étalonnage des radars à ondes millimétriques, les informations de mesure comprenant des informations d'emplacement et des informations de vitesse de la pluralité de cibles statiques dans un système de coordonnées de véhicule, et les paramètres d'étalonnage comprenant une quantité de rotation et une quantité de translation pour la transformation du système de coordonnées radar au système de coordonnées de véhicule, la couverture angulaire prédéfinie comprenant une première couverture angulaire prédéfinie et une seconde couverture angulaire prédéfinie ;

le module d'obtention (501) étant spécifiquement configuré pour : obtenir des premières informations de suivi d'une pluralité de premières cibles statiques dans les limites de la première couverture angulaire prédéfinie au moyen d'un premier radar à ondes millimétriques, et obtenir des secondes informations de suivi d'une pluralité de secondes cibles statiques dans les limites de la seconde couverture angulaire prédéfinie au moyen d'un second radar à ondes millimétriques, les informations de suivi comprenant les premières informations de suivi et les secondes informations de suivi, la pluralité de cibles statiques comprenant la pluralité de premières cibles statiques et la pluralité de secondes cibles statiques, les radars à ondes millimétriques comprenant le premier radar à ondes millimétriques et le second radar à ondes millimétriques, et une distance de détection et un champ de vision de couverture du premier radar à ondes millimétriques étant différents d'une distance de détection et d'un champ de vision de couverture du second radar à ondes millimétriques ; et le module d'obtention (501) étant spécifiquement configuré pour :

calculer les premières informations de mesure dans les limites de la première couverture angulaire prédéfinie en fonction des premières informations de suivi et d'un paramètre d'étalonnage du radar à ondes millimétriques, et calculer des secondes informations de mesure dans les limites de la seconde couverture angulaire prédéfinie en fonction des secondes informations de suivi et d'un paramètre d'étalonnage du radar à ondes millimétriques, les informations de mesure comprenant les premières informations de mesure et les secondes informations de mesure.

8. Appareil de positionnement de véhicule selon la revendication 7,

le module de détermination (502) étant spécifiquement configuré pour : calculer une probabilité d'occupation de chaque unité de grille dans une zone de grille en fonction des informations de limite de route et des informations de limite de route historiques, la zone de grille couvrant le véhicule cible, et la zone de grille comprenant une pluralité d'unités de grille ;

obtenir une carte de grille de probabilité en fonction de la probabilité d'occupation de chaque unité de grille dans la zone de grille ;

déterminer des informations de limite fusionnées en fonction d'une unité de grille cible dans la carte de grille de probabilité, une probabilité d'occupation de l'unité de grille cible étant supérieure à un seuil de probabilité prédéfini ; et

calculer les informations de courbure de route en fonction des informations de limite fusionnées.

9. Appareil de positionnement de véhicule selon l'une quelconque des revendications 7 à 8, l'appareil de positionnement de véhicule comprenant en outre un module de calcul et un module de suppression ;

le module d'obtention (501) étant en outre configuré pour : avant la détermination du module de détermination, en fonction des informations de mesure, des informations de limite de route actuelles correspondant au moment de trame actuel, obtenir des informations de cible statique candidate et M éléments d'informations de cible statique de référence à partir des informations de mesure, M étant un entier supérieur à 1 ;

le module de calcul étant configuré pour calculer une distance moyenne entre les M éléments d'informations de cible statique de référence et les informations de cible statique candidate qui sont obtenues par le module d'obtention ; et

le module de suppression étant configuré pour : supprimer les informations de cible statique candidate des informations de mesure si la distance moyenne calculée par le module de calcul ne satisfait pas à une condition cible statique prédéfinie ;

les informations de cible statique candidate étant l'une quelconque de la pluralité d'éléments d'informations de cible statique, et les informations de cible statique de référence étant des informations de cible statique avec une distance par rapport aux informations de cible statique candidate inférieure à une distance prédéfinie, dans la pluralité d'éléments d'informations de cible statique.

10. Appareil de positionnement de véhicule selon la revendication 9,
le module de suppression étant spécifiquement configuré pour : si la distance moyenne est supérieure à un seuil, déterminer que la distance moyenne ne satisfait pas à la condition cible statique prédéfinie et supprimer les informations de cible statique candidate des informations de mesure.

11. Support de stockage lisible par ordinateur, comprenant une instruction, lorsque l'instruction est exécutée sur un ordinateur, l'ordinateur étant activé pour effectuer le procédé selon l'une quelconque des revendications 1 à 6.

...

S4 → In-vehicle map system

S1 Positioning sensing and synchronization hardware system

S2 Positioning data collection system

S3 Millimeter wave radar positioning processing system

S6 Cloud computing center

S5 Vehicle computer

Vehicle side

Cloud side

FIG. 1

Millimeter wave radar

Global positioning system receiver

Data synchronization unit

Data collection unit

Positioning input unit

Lane quantity map

Radar positioning processing board

Vehicle computer or automatic driving computing platform

Local positioning image composition unit on a vehicle side

Positioning result display or voice prompt

Cloud map

Vehicle gateway

CLOUD COMPUTING

Cloud computing center

Cloud positioning processing unit

FIG. 2

FIG. 3

FIG. 4

Obtain measurement information within preset angle coverage at a current frame moment by using a measurement device, where the measurement information includes a plurality of pieces of static target information, the plurality of pieces of static target information are used to indicate information about a plurality of static targets, and the plurality of pieces of static target information have a one-to-one correspondence with the information about the plurality of static targets — 201

Determine, based on the measurement information, current road boundary information corresponding to the current frame moment — 202

Determine first target positioning information based on the current road boundary information, where the first target positioning information is used to indicate a location of a target vehicle on a road — 203

Determine road curvature information based on the current road boundary information and historical road boundary information, where the road curvature information is used to indicate a bending degree of the road on which the target vehicle is located, the historical road boundary information includes road boundary information corresponding to at least one historical frame moment, and the historical frame moment is a moment that is before the current frame moment and at which the road boundary information and road curvature information are obtained — 204

Output the first target positioning information and the road curvature information — 205

FIG. 5

FIG. 6

Y

Left rear
short range radar
coordinate system

Left front
short range radar
coordinate system

Y

X

O

O

X

O

O

X

O

Medium-long range
radar coordinate
system

Y

X

Y

Vehicle
coordinate system

X

X

O

Right rear
short range radar
coordinate system

Right front
short range radar
coordinate system

Y

Y

Y

FIG. 7

Input tracking information of a millimeter wave radar and a calibration parameter of the millimeter wave radar — 2011

↓

Transform the tracking information from a radar coordinate system to a vehicle coordinate system — 2012

↓

Output radar information within preset angle coverage — 2013

FIG. 8

Input static target information detected by a millimeter wave radar — 2041

↓

Specify a grid area surrounding a self-vehicle — 2042

↓

Calculate an occupation probability of each grid unit, and superimpose occupation probabilities of grid units in several frames, to obtain a probability grid map — 2043

↓

Calculate road curvature information based on the probability grid map — 2044

FIG. 9

First frame

Two frames are superimposed    Three frames are superimposed

Four frames are superimposed    Five frames are superimposed

FIG. 10

Road in a driving field of view

$(x_c, y_c)$   Location of a self-vehicle

$g_\theta(x_c)$

FIG. 11

```
┌─────────────────────────────────────┐
│   Extract candidate static target    │  ╱ 301
│   information from radar information  │
│   within preset angle coverage       │
└─────────────────────────────────────┘
                    │
                    ▼
┌─────────────────────────────────────┐
│   Remove abnormal isolated candidate │  ╱ 302
│   static target information           │
└─────────────────────────────────────┘
                    │
                    ▼
┌─────────────────────────────────────┐
│   Construct a polynomial for road    │  ╱ 303
│   boundary information                │
└─────────────────────────────────────┘
                    │
                    ▼
┌─────────────────────────────────────┐
│   Calculate optimal road boundary    │  ╱ 304
│   information                         │
└─────────────────────────────────────┘
                    │
                    ▼
┌─────────────────────────────────────┐
│   Perform weighted averaging after   │  ╱ 305
│   historical road boundary           │
│   information is input, to obtain     │
│   stability augmented boundary        │
│   information                         │
└─────────────────────────────────────┘
                    │
                    ▼
┌─────────────────────────────────────┐
│   Calculate a lane width             │  ╱ 306
└─────────────────────────────────────┘
                    │
                    ▼
┌─────────────────────────────────────┐
│   Calculate a lane in which a        │  ╱ 307
│   vehicle is located                 │
└─────────────────────────────────────┘
                    │
                    ▼
┌─────────────────────────────────────┐
│   Output first target positioning    │  ╱ 308
│   information                         │
└─────────────────────────────────────┘
```

FIG. 12

Calculated
inaccurate boundary

Calculated accurate
boundary

FIG. 13

Obtain measurement information within preset angle coverage at a current frame moment by using a measurement device, where the measurement information includes a plurality of pieces of static target information and at least one piece of moving target information, the plurality of pieces of static target information are used to indicate information about a plurality of static targets, and the plurality of pieces of static target information have a one-to-one correspondence with the information about the plurality of static targets — 401

Determine, based on the measurement information, current road boundary information corresponding to the current frame moment — 402

Obtain the at least one piece of moving target information from the measurement information, where each piece of moving target information carries a target sequence number, and the target sequence number is used to identify a different moving target — 403

Determine lane occupation information based on the at least one piece of moving target information and corresponding historical moving target information — 404

Determine, based on the lane occupation information, second target positioning information corresponding to the current frame moment, where the second target positioning information is used to indicate a location of a target vehicle on a road — 405

Determine first target positioning information based on the current road boundary information, where the first target positioning information is used to indicate the location of the target vehicle on the road — 406

Determine road curvature information based on the current road boundary information and historical road boundary information, where the road curvature information is used to indicate a bending degree of the road on which the target vehicle is located, the historical road boundary information includes road boundary information corresponding to at least one historical frame moment, and the historical frame moment is a moment that is before the current frame moment and at which the road boundary information and road curvature information are obtained — 407

Output the first target positioning information and the road curvature information — 408

FIG. 14

```
┌─────────────────────────────────────────┐
│ Extract moving target information by using a │  ╱ 4031
│          millimeter wave radar            │
└─────────────────────────────────────────┘
                    │
                    ▼
┌─────────────────────────────────────────┐
│  Record historical moving target information │  ╱ 4032
└─────────────────────────────────────────┘
                    │
                    ▼
┌─────────────────────────────────────────┐
│   Mark a lane occupied by the moving target  │  ╱ 4033
│                 information                │
└─────────────────────────────────────────┘
                    │
                    ▼
┌─────────────────────────────────────────┐
│    Record lane occupation information, and   │  ╱ 4034
│      determine a lane occupation status     │
└─────────────────────────────────────────┘
                    │
                    ▼
┌─────────────────────────────────────────┐
│   Output a positioning result of the moving  │  ╱ 4035
│                target information           │
└─────────────────────────────────────────┘
```

FIG. 15

FIG. 16

FIG. 17

FIG. 18

50

## Vehicle positioning apparatus

501

Obtaining module

502

Determining module

503

Output module

504

Calculation module

505

Removal module

FIG. 19

610 — RF circuit

670 — Wi-Fi module

690

680

Power supply

620

Memory

Processor

660

Audio circuit

Loudspeaker 661

Microphone 662

Sensor — 650

630

Input unit

Touch panel — 631

Another input device

632

Display unit

Display panel

640

641

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011044507 A1
- US 2005228580 A1
- DE 102015002155 A1
- US 2001025211 A1